# EUROPEAN PATENT APPLICATION

(11) **EP 3 266 895 A1**
(43) Date of publication of application: **10.01.2018**
(21) Application number: 16758822.7
(22) Date of filing: 24.02.2016
(51) Int. Cl.: C22C 38/00, C22C 38/54, C22C 38/58, H01M 8/0202, H01M 8/10, C21D 9/46

(54) **THIN STAINLESS STEEL SHEET FOR SOLID POLYMER FUEL CELL SEPARATOR**

(30) Priority: 03.03.2015 JP 2015041699
(71) Applicant: Nippon Steel & Sumitomo Metal Corporation, Tokyo 100-8071 (JP)
(72) Inventor: TARUTANI, Yoshio, Tokyo 100-8071 (JP); HAMADA, Ryuji, Tokyo 100-8071 (JP); YAZAWA, Takeo, Tokyo 100-8071 (JP); SEKI, Akira, Tokyo 100-8071 (JP); ADACHI, Kazuhiko, Tokyo 100-8071 (JP); IMAMURA, Junko, Tokyo 100-8071 (JP)
(74) Representative: J A Kemp
(86) International application number: PCT/JP2016/055496
(87) International publication number: WO 2016/140128

(57) **Abstract**

A stainless steel sheet used for a separator of a polymer electrolyte fuel cell, wherein the steel sheet has a volume ratio of M2B boride-based metal precipitates of 8% or higher and a volumetric-basis particle-size frequency distribution of M2B boride-based metal precipitates having sphere-equivalent diameters of 6.72 µm or less of 99.5% or higher, in a surface layer which has a depth of 0.2t from at least one of surfaces (t is an overall thickness of the steel sheet), and the steel sheet has an apparent density of 0.995 or higher, assuming a real density to be 1. A polymer electrolyte fuel cell in which the stainless steel sheet is used for a separator is given an excellent cell performance without high-cost surface treatment such as expensive gold plating for the reduction of the contact resistance of a surface.

## Description

### TECHNICAL FIELD

The present invention relates to a stainless steel sheet for a polymer electrolyte fuel cell separator. In particular, the present invention relates to a stainless steel sheet for a separator (bipolar plate) of a polymer electrolyte fuel cell that is used as a vehicle-mounted power source or a home power source.

### BACKGROUND ART

Fuel cells are batteries that generate direct-current using hydrogen and oxygen, and are roughly classified into a solid-electrolyte type, molten carbonate type, phosphoric-acid type, and polymer-electrolyte type. These types are derived from the constituent material of an electrolyte portion that constitutes the essential part of each type of fuel cell.

Nowadays, fuel cells reaching their commercialized phase include a phosphoric-acid type, which operates at about 200°C, and a molten-carbonate type, which operates at about 650°C. With the progress of technical development in recent years, a solid-electrolyte type, which operates at 700°C or higher, and a polymer-electrolyte type, which operates even at 80°C or lower both have received attention as a vehicle-mounted power source or a compact home power source, and sales of products have started with the aim for market expansion.

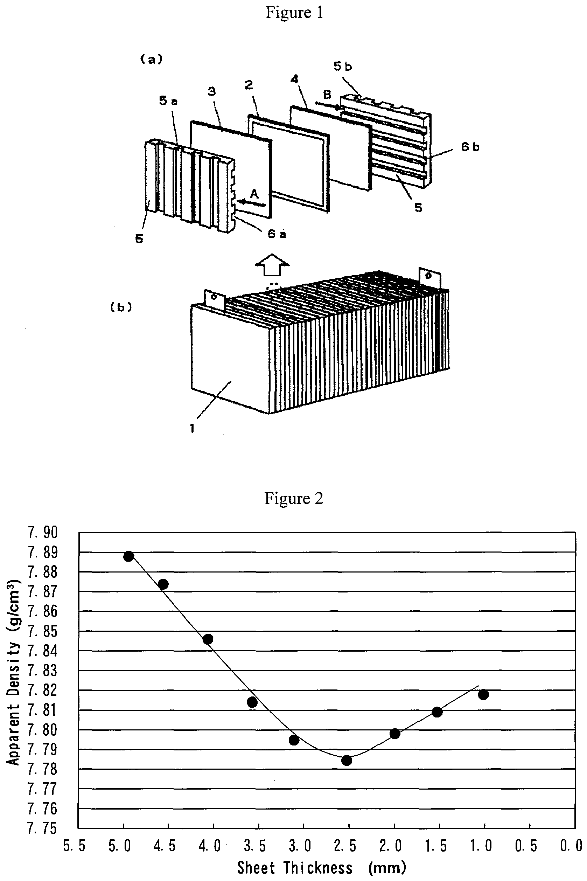

Figure 1 is a schematic diagram illustrating the structure of a polymer electrolyte fuel cell, where Figure 1(a) is an exploded view of the fuel cell (single cell), and Figure 1(b) is a perspective view of the entire fuel cell. As illustrated in the drawing, a fuel cell 1 is a set of single cells. A single cell has a structure in which, as illustrated in Figure 1(a), a fuel electrode film (anode) 3 is stacked on one surface of a polymer electrolyte membrane 2, an oxidant electrode film (cathode) 4 is stacked on the other surface of the polymer electrolyte membrane 2, and separators 5a and 5b are stacked on both of the surfaces. A typical polymer electrolyte membrane 2 is a fluorocarbon-type ion-exchange resin membrane that includes a hydrogen ion (proton) exchange group. The fuel electrode film 3 and the oxidant electrode film 4 each include a catalyst layer that is made up of a particulate platinum catalyst, carbon powder, and a fluororesin including a hydrogen ion (proton) exchange group. The catalyst layer comes into contact with a fuel gas or an oxidative gas that transmits a diffusion layer. A fuel gas (hydrogen or hydrogen-contained gas) A is caused to flow through channels 6a provided on the separator 5a, and hydrogen is supplied to the fuel electrode film 3. In addition, an oxidative gas B such as air is caused to flow through channels 6b provided on the separator 5b, and oxygen is supplied. The supply of these gasses causes electrochemical reaction, generating DC power.

The functions required of polymer electrolyte fuel cell separators include:
(1) the function as a channel for supplying a fuel gas with in-plane uniformity, on a fuel-electrode side;
(2) the function as a channel for efficiently discharging water generated on the cathode side from the fuel cell out of the system, together with carrier gasses such as air after the reaction, and oxygen;
(3) the function of an electrical connector between single cells, the electrical connector keeping a low electric resistance and a good conductivity for a long time as an electrode;
(4) the function as a "partition wall" between adjacent cells, between an anode chamber of one cell and a cathode chamber of the adjacent cell; and the like.

Thus far, the application of a carbon plate material as a separator material has been studied. However, the carbon plate material involves a problem of being prone to be cracked and further involves a problem in that a machine working cost for flattening a surface and a machine working cost for forming gas channels significantly increase.

Of all carbons, thermal expansive graphite processed goods are remarkably inexpensive and are attracting the most attention as a starting material for a polymer electrolyte fuel cell separator. However, to impart the function as a partition wall by decreasing gas permeability, it is necessary to develop, choose, and fire an organic resin as a binding material that is excellent in durability in a fuel cell environment, taking a producing cost into consideration. A need is also for measures against degradation in a long time application. Although the thermal expansive graphite processed goods are in the production application stage, there are many problems therewith yet to be solved.

Unlike such a study of the application of graphite-based starting materials, an attempt to apply a stainless steel as a separator starting material has been started.

Patent Document 1 discloses a separator for fuel cells that is made up of a metallic member and includes a surface to come into contact with an electrode of a unit cell is directly gold plated. As the metallic member, a stainless steel, aluminum, and a Ni-Fe alloy are listed, and as the stainless steel, SUS304 is used. According to the invention, since the separator is gold plated, a contact resistance between the separator and the electrode is reduced, which enhances the electronic continuity from the separator to the electrode so that the output voltage of the fuel cell increases.

Patent Document 2 discloses a polymer electrolyte fuel cell with a separator made up of a metal material from which a passivation coat to be formed on a surface is easily generated by the air. As the metal material, a stainless steel and a titanium alloy are listed. According to the invention, the passivation coat is always present on the surface of the metal used for the separator, which makes the surface of the metal less prone to erosion chemically, so that the degree of ionization of water generated in the fuel cell is decreased, with the result that the reduction of electrochemical reactivity in the fuel cell is curbed. In addition, by removing a passivation film from a portion of the separator that is in contact with an electrode film and the like and forming a noble metal layer on the portion, an electric contact resistance value decreases.

However, even if a metal material such as the stainless steels disclosed in Patent Documents 1 and 2, each of which includes a passivation coat on its surface, is used for separators as they are, their insufficient corrosion resistances may cause metals to dissolve, and dissolved metal ions may degrade the capability of a support catalyst. In addition, there is concern that corrosion products such as Cr-OH and Fe-OH generated after the dissolution increases the contact resistances of the separators, and thus the current situation is that a separator made up of a metal material is subjected to noble metal plating such as gold plating, without regard to cost.

As seen from the above, the situation thus far is nothing more than experiences of applying metal materials to separators, which still falls far short of practical use.

There is an extremely strong demand for developing a stainless steel that is, as a separator, excellent in electric conductivity in a cell environment and at the same time in corrosion resistance without an expensive surface treatment. It is no exaggeration to say that the practical use of stainless-steel-made separators is the key to success of the commercialization and expanded application of polymer electrolyte fuel cells.

A rigorous cost reduction is demanded of the starting material for a separator of a polymer electrolyte fuel cell that is used in a vehicle-mounted power source, as well as a distributed home power source, and thus there are numerous technical developments to make stainless steels applicable without an expensive, special surface treatment.

Patent Document 3 discloses a ferritic stainless steel for a polymer-electrolyte fuel cell separator that contains no B (boron) in steel, containing none of M23C6, M4C, M2C, MC carbide-based metal precipitates and M2B boride-based inclusions precipitating in steel as conductive metal precipitates, and contains an amount of C of 0.012% or less in steel (in the present specification, the unit symbol "%" in chemical component means "mass%" unless otherwise noted).

Patent Documents 4 and 5 disclose polymer electrolyte fuel cells each of which applies a ferritic stainless steel containing none of such conductive metal precipitates precipitating is applied as a separator.

Patent Document 6 discloses a ferritic stainless steel for a separator of a polymer electrolyte fuel cell that contains no B in steel but contains C (carbon) at 0.01 to 0.15% in steel, and contains only Cr carbides precipitating.

Patent Document 7 discloses an austenitic stainless steel for a separator of a polymer electrolyte fuel cell that contains no B in steel but contains C at 0.015 to 0.2% in steel and Ni at 7 to 50%, and contains Cr carbides precipitating.

Patent Document 8 discloses a stainless steel for a separator of a polymer-electrolyte fuel cell in which one or more of M23C6, M4C, M2C, MC carbide-based metal precipitates and M2B boride-based inclusions having conductivities are dispersed and exposed on its surface. The stainless steel is a ferritic stainless steel containing C: 0.15% or less, Si: 0.01 to 1.5%, Mn: 0.01 to 1.5%, P: 0.04% or less, S: 0.01% or less, Cr: 15 to 36%, Al: 0.001 to 6%, and N: 0.035% or less, wherein the contents of Cr, Mo, and B satisfy 17% ≤ Cr + 3 × Mo - 2.5 × B, and the balance is Fe and impurities. In addition, Patent Document 8 discloses in its Table 1 steel materials a to i as examples of the ferritic stainless steel, particularly, where examples a, e, f, and i have amounts of C in steel of 0.02% or more, and while the example a contains no B in steel, the examples e and f have contents of B of 0.002% and 0.003%, respectively, and the example i has a content of Cr of 22.3% and a content of B of 2.06%. In addition, examples Nos. 1 to 4, 8, and 10 in Table 2 disclose ferritic stainless steel materials each including a principal precipitate that is one of M23C6, M23C6 and M2B, and Cr2B. In addition, Nos. 19 to 27 in Table 3, and Nos. 39 to 44 and Nos. 47 to 51 in Table 4 also disclose ferritic stainless steel materials each including a principal precipitate that is one of M23C6, and M23C6 and M2B. The contact resistances of the examples were 15.6 mΩ cm² or lower in terms of initial value. The ingot-making process of the steel materials described by way of example is the ingot method. The heating temperature in hot forging is set at 1220°C or 1170°C for ferritic steel materials, the heating temperature in hot rolling is set at 1220°C or 1170°C, and the finishing thickness of the hot-rolling is set at 3.8 mm and 2.6 mm. The temperature of annealing after the hot rolling is set at 840°C or 925°C.

Patent Document 9 discloses a method for producing a stainless steel material for a separator of a polymer electrolyte fuel cell, the method causing corrosion on a surface of a stainless steel material using an acid aqueous solution, so as to expose, on the surface, one or more of conductive M23C6, M4C, M2C, MC carbide-based metal precipitates and M2B boride-based metal precipitates. The stainless steel material is a ferritic stainless steel material containing C: 0.15% or less, Si: 0.01 to 1.5%, Mn: 0.01 to 1.5%, P: 0.04% or less, S: 0.01% or less, Cr: 15 to 36%, Al: 0.001 to 6%, B: 0 to 3.5%, N: 0.035% or less, Ni: 0 to 5%, Mo: 0 to 7%, Cu: 0 to 1%, Ti: 0 to 25 × (C% + N%), and Nb: 0 to 25 × (C% + N%), wherein the contents of Cr, Mo, and B satisfy 17% ≤ Cr + 3 × Mo - 2.5 × B, and the balance is Fe and impurities. Patent Document 9 discloses in its Table 1 steel materials a to i as examples of the ferritic stainless steel, where examples a, e, f, and i have amounts of C in steel of 0.02% or more, and while the example a contains no B in steel, the examples e and f have contents of B of 0.002% and 0.003%, respectively, and the example i has a content of Cr of 22.3% and a content of B of 2.06%. In addition, examples Nos. 1 to 4, 8, and 10 in Table 2 disclose ferritic steel materials each including a principal precipitate that is one of M23C6, M23C6 and M2B, and Cr2B. In addition, Nos. 19 to 27 in Table 3, and Nos. 39 to 44 and Nos. 47 to 51 in Table 4 also disclose ferritic steel materials each including a principal precipitate that is one of M23C6, and M23C6 and M2B. The contact resistances of the examples were 15.6 mΩ cm² or lower in terms of initial value. The ingot-making process of the steel materials described by way of example is the ingot method. The heating temperature in hot forging is set at 1220°C or 1170°C for ferritic steel materials, the heating temperature in hot rolling is set at 1220°C or 1170°C, and the finishing thickness of the hot-rolling is set at 3.8 mm and 2.6 mm. The temperature of annealing after the hot rolling is set at 840°C or 925°C.

Patent Document 10 discloses a polymer electrolyte fuel cell in which M2B boride-based metal compounds are exposed on a surface, and assuming that the area of an anode and the area of a cathode are both one, an area in which the anode is in direct contact with a separator, and an area in which the cathode is in direct contact with the separator are both ratios from 0.3 to 0.7, and discloses a stainless steel in which one or more of M23C6, M4C, M2C, MC carbide-based metal precipitates and M2B boride-based inclusions having conductivities are exposed on a surface of the stainless steel. The stainless steel constituting the separator is a ferritic stainless steel material that contains C: 0.15% or less, Si: 0.01 to 1.5%, Mn: 0.01 to 1.5%, P: 0.04% or less, S: 0.01% or less, Cr: 15 to 36%, Al: 0.2% or less, B: 3.5% or less (excluding 0%), N: 0.035% or less, Ni: 5% or less, Mo: 7% or less, W: 4% or less, V: 0.2% or less, Cu: 1% or less, Ti: 25 × (C% + N%) or less, and Nb: 25 × (C% + N%) or less, where the contents of Cr, Mo, and B satisfy 17% ≤ Cr + 3 × Mo - 2.5 × B. Patent Document 10 discloses, in its Table 1, 12 examples of the ferritic stainless steel. However, Patent Document 10 discloses no steel material that contains B in steel, the content of C in steel is 0.02% or more and 0.06% or less, and the content of Ni in steel is 0.01% to 6%.

Furthermore, Patent Documents 11 to 15 disclose austenitic stainless clad steel materials in each of which M2B boride-based conductive metal precipitates are exposed on its surface.

Meanwhile, as prior art, disclosures are also made of polymer electrolyte fuel cell separator materials in each of which a Laves phase, which is a conductive metal precipitate, is dispersed and caused to precipitate in steel. For example, Patent Document 16 discloses a high-purity ferritic stainless steel material of a Fe2Mo-Laves-phase-dispersed-precipitated type for a polymer electrolyte fuel cell separator, and Patent Documents 17 and 18 disclose high-purity ferritic stainless steel materials of a (Fe,Cr)2(Ti,Nb,Mo,W)-Laves-phase-dispersed-precipitated type for a polymer electrolyte fuel cell separator.

Furthermore, as prior art, disclosures are also made of polymer electrolyte fuel cell separator materials in each of which a sigma phase, which is a conductive metal precipitate, is dispersed and caused to precipitate in steel. For example, Patent Document 19 discloses a ferritic stainless steel for a polymer electrolyte fuel cell separator that has a chemical composition containing C: 0.03% or less, N: 0.03% or less, (C + N): 0.03% or less, and Cr: 16.0 to 45%, further containing one or more kinds selected from Ti: 2% or less, Nb: 2% or less, Zr: 2% or less, V: 2% or less, Mo: 7% or less, W: 7% or less, Ni: 4% or less, Si: 3% or less, Mn: 3% or less, and Al: 0.5% or less, and containing the balance being Fe and impurities, and that includes a σ phase precipitating on its surface, the σ phase having an area fraction of 1% or more. Patent Document 20 discloses an austenitic stainless steel for a polymer electrolyte fuel cell separator that has a chemical composition containing C: 0.030% or less, Si: 3% or less, Mn: 3% or less, Cr: 16 to 30%, Ni: 8 to 40%, and N: 0.4% or less, containing the balance being Fe and impurities, and making a Q value that is calculated by, using the content of each element, [Cr] + [Si] + [Ti] + [V] + 1.5([Zr] + [Nb] + [Mo]) + 0.5[W] - 0.1([Ni] + [Mn]) - 20([C] + [N]) more than 18, and that has a metal micro-structure including a σ phase exposed on its surface, the σ phase having an area fraction of 1% or more. Of the examples shown in Table 2 of Patent Document 19, the area fraction accounted for by the sigma phase is, at most, 7.8% by a steel No.5. Of the examples shown in Table 2 of Patent Document 20, the area fraction accounted for by the sigma phase is, at most, 7.7% by a steel No.9.

### LIST OF PRIOR ART DOCUMENTS

### PATENT DOCUMENT

Patent Document 1: JP10-228914A
Patent Document 2: JP8-180883A
Patent Document 3: JP3269479B
Patent Document 4: JP3097689B
Patent Document 5: JP3097690B
Patent Document 6: JP3397168B
Patent Document 7: JP3397169B
Patent Document 8: JP4078966B
Patent Document 9: JP3365385B
Patent Document 10: JP3888051B
Patent Document 11: JP3971267B
Patent Document 12: JP4155074B
Patent Document 13: JP4305031B
Patent Document 14: JP4613791B
Patent Document 15: JP5246023B
Patent Document 16: JP3922154B
Patent Document 17: JP4967397B
Patent Document 18: JP4967398B
Patent Document 19: JP4967831B
Patent Document 20: JP4930222B

### SUMMARY OF INVENTION

### TECHNICAL PROBLEM

The development of techniques related to polymer electrolyte fuel cell separators is in the situation described above. The stainless steel sheet for a separator of a polymer electrolyte fuel cell in which one or more of conductive M23C6, M4C, M2C, MC carbide-based metal precipitates and M2B boride-based metal precipitates are exposed on its surface, has sufficient properties and sufficient performances necessary for a steel sheet for a separator of a polymer electrolyte fuel cell, but involves a problem of being slightly inferior in contact electric resistance performance to gold-plating-treated stainless steel materials that are normally used as prior art, and thus is strongly demanded to have further improved performances as high as those of gold-plating-treated stainless steel materials, which are considered ideal.

An objective of the present invention is to provide an austenitic stainless steel sheet and a ferritic stainless steel sheet for a polymer electrolyte fuel cell separator having a contact electric resistance that is equal to or lower than that of a gold-plated stainless starting material.

### SOLUTION TO PROBLEM

A separator of a polymer electrolyte fuel cell is one having the following five functions:
a) the function as a channel for supplying a fuel gas with in-plane uniformity, on a fuel-electrode side;
b) the function as a channel for supplying an oxidative gas with in-plane uniformity, on a cathode side;
c) the function as a channel for efficiently discharging water generated on the cathode side, from the fuel cell out of the system, together with carrier gasses such as air after the reaction, and oxygen;
d) the function of an electrical connector between single cells, the electrical connector keeping a low contact electric resistance and a good conductivity for a long time as an electrode; and
e) the function of a partition wall between adjacent cells, between an anode chamber of one cell and a cathode chamber of the adjacent cell.
These functions may be implemented in a structure in which the functions are shared among a plurality of plates. In the present invention, the separator refers to a plate having at least the function d) described above. The separator may be called a bipolar plate, a mesh plate, or a current plate. The plate thickness of the separator is often about 0.08 to 0.30 mm.

The present inventors have dedicated many years to develop stainless steel materials that are hard to cause a decrease in catalyst capability and a decrease in polymer film capability, and check an increase in contact resistance with an MEA (the abbreviation of Membrane Electrode Assembly), which is constituted by a diffusion layer, a polymer film, and a catalyst layer, even after a long-time use as a separator for a polymer electrolyte fuel cell.

Specifically, the present inventors have conducted a fuel cell application test using conventional SUS304 and SUS316L, their gold-plating-treated materials, M2B-conductive-metal-precipitate stainless materials or M23C6-conductive-metal-precipitate stainless materials, conductive-particulate-powder-application-treated stainless materials or conductive-particulate-powder-coating-treated stainless materials, surface-modification-treated stainless materials, or the like. As a result, the following findings (I) to (VI) were obtained.
(I) A passivation film formed on a surface of a stainless steel has a corrosion resistance performance sufficient for a stainless steel applied to a separator in a polymer electrolyte fuel cell in operation but may have an insufficient corrosion resistance for inhibiting an increase in contact resistance owing to the dissolution of metal ions slowly proceeding in a passivated state or the deposition of corrosion products proceeding owing to inter-cell corrosion that may become apparent when the fuel cell is not operated, or the like.
(II) Noble-metal-plating, such as gold plating, that is commonly performed to improve the contact resistance performance of a stainless-steel-made separator not only significantly increase the producing cost of the separator but also causes galvanic corrosion between the noble metal and the stainless steel for a substrate (also called bimetallic corrosion), and thus cannot be employed in a full-fledged volume production stage of fuel cells. Furthermore, the noble-metal-plating presents a problem from another point of view in that plated noble metal has to be reclaimed from used fuel cells to be wasted in the future.
(III) Although it depends on what is selected as fine conductive powder, application or coating of fine conductive powder raises a problem of durability when carbon (or graphite) that is a common choice is used, and of cost when noble metal is used. In addition, the treatments are assumed to be causes of a dust issue in a production step and need a large-scale production line including a firing step. Furthermore, when surface treatment is to be performed after formation of a separator, there also arises a problem in that it is difficult to avoid a warp deformation or keep a dimensional accuracy of a separator, which requires an extremely high accuracy in several µm units.
(IV) Surface modification (also called dry surface treatment or dry coating) broadens the range of options for surface performance improvement, but it involves the formation of an extremely thin treated layer on an outermost surface layer of stainless steel, and thus involves a mountain of problems such as a long-term guarantee of performance, corrosion caused from a micro defect on a surface modified layer attributable to oxide-based non-metallic precipitates that inevitably reside in stainless steel to be used as a substrate, peeling-off issue, and surface modification treatment rate. Furthermore, performing surface modification treatment after forming of a separator results in the occurrence of a warp owing to residual stress. This makes it difficult to secure a dimensional accuracy for a separator, which requires an extremely high accuracy in several µm units.
(V) The method to reduce surface contact resistance by exposing conductive metal precipitates such as M2B and M23C6 that precipitate in steel, on a surface of a separator is the most promising in terms of performance, volume productivity, cost, resource recovery at the time of future disposal, and environment friendliness.

Here, description will be made in detail about the method to reduce surface contact resistance by exposing conductive metal precipitates that are M2B precipitating in steel, on a surface of a separator, the method being determined to be the most promising.

The contact electric resistance depends on a contact area per unit area. In other words, the contact electric resistance depends on the number of contact points and the total area of contact points per unit area, and the electric resistances of individual contact points. In the application to a separator, the properties and distribution state of a carbon fiber on a diffusion layer, such as carbon paper and carbon cloth, that is to be in contact with the separator is optimally designed in terms of the function as the diffusion layer, and it is desirable for a separator that all of regions having possibilities of coming into contact with the carbon fiber, in other words, the entire surface functions as a conductive path (a path of electricity). That is, to improve the performance, assuming that the contact points are M2B and the electric resistance thereof is already determined, it is effective that conductive precipitates have shapes and a dispersion state that increase the number of the contact points and the total area of the contact points as high as possible. The present inventors studied various methods and came up with a most effective technique with an eye toward the application to volume production.

Specifically, the present inventors found that it is effective to contain a maximum amount of B up to which volume production is allowed and to crush and disperse M2B boride-based metal precipitate as fine as possible in cold rolling while increasing the amount of M2B boride-based metal precipitates as many as possible, that is, while securing a workability in performing press forming on a polymer electrolyte fuel cell separator, and further repeatedly conducted studies to accomplish the present invention. The present invention is as follows.
(1) A stainless steel sheet used for a separator of a polymer electrolyte fuel cell, wherein
   the steel sheet has a volume ratio of M2B boride-based metal precipitates of 8% or higher and a volumetric-basis particle-size frequency distribution of M2B boride-based metal precipitates having sphere-equivalent diameters of 6.72 µm or less of 99.5% or higher, in surface layer which has a depth of 0.2t from at least one of surfaces of the steel sheet (t is an overall thickness of the steel sheet), and
   the steel sheet has an apparent density of 0.995 or higher, assuming a real density to be 1.
(2) The stainless steel sheet according to (1), wherein
   the stainless steel sheet is an austenitic stainless steel sheet,
   the surface layer has a chemical composition containing, in mass %,
   C: 0.005 to 0.2%,
   Si: 0.01 to 1.5%,
   Mn: 0.01 to 2.5%,
   P: 0.035% or less,
   S: 0.01% or less,
   Cr: 16.0 to 30.0%,
   Mo: 7.0% or less,
   Ni: 7.0 to 50.0%,
   Cu: 0.01 to 3.0%,
   N: 0.001% to 0.4%,
   V: 0.3% or less,
   B: 0.50 to 3.0%,
   Al: 0.001 to 0.2%,
   W: 0 to 4.0%,
   Sn: 0 to 3.0%,
   rare earth metals: 0 to 0.1%, and
   the balance: Fe and impurities, and
   a calculated value of [Cr%] + 3 × [Mo%] - 2.5 × [B%] - 17 × [C%] is 24.0 to 45.0%.
(3) The austenitic stainless steel sheet according to (2), wherein
   the chemical composition contains
   W: 0.01 to 4.0% and/or
   Sn: 0.01 to 3.0%.
(4) The austenitic stainless steel sheet according to (2) or (3), wherein
   the chemical composition contains
   rare earth metals: 0.001 to 0.1%.
(5) The stainless steel sheet according to (1), wherein
   the stainless steel sheet is a ferritic stainless steel sheet,
   the surface layer has a chemical composition containing, in mass %,
   C: 0.001 to 0.15%,
   Si: 0.01 to 1.5%,
   Mn: 0.01 to 1.0%,
   P: 0.035% or less,
   S: 0.01% or less,
   Cr: 22.5 to 35.0%,
   Mo: 6.00% or less,
   Ni: 0.01 to 6.0%,
   Cu: 0.01 to 1.0%,
   N: 0.06% or less,
   V: 0.01 to 0.3%,
   B: 0.50 to 3.0%,
   Al: 0.001 to 6.0%,
   W: 0 to 4.0%,
   Sn: 0 to 3.0%,
   rare earth metals: 0 to 0.1%, and
   the balance: Fe and impurities, and
   a calculated value of [Cr%] + 3 × [Mo%] - 2.5 × [B%] - 17 × [C%] is 24.0 to 45.0%.
(6) The ferritic stainless steel sheet according to (5), wherein
   the chemical composition contains
   W: 0.01 to 4.0% and/or
   Sn: 0.01 to 3.0%.
(7) The ferritic stainless steel sheet according to (5) or (6), wherein
   the chemical composition contains
   rare earth metals: 0.001 to 0.1%.

### ADVANTAGEOUS EFFECTS OF INVENTION

The stainless steel sheet according to the present invention is given an excellent cell performance without being subjected to high-cost surface treatment such as expensive gold plating for the reduction of the contact resistance of a surface, and only by exposing composite conductive metal precipitates made by M23C6 precipitating on and around the surfaces of M2B and M23C6 precipitating in steel or M2B dispersed in steel that serve as precipitation nuclei. Consequently, according to the present invention, it is possible to provide an excellent contact resistance value equivalent to that of a gold-plated material, which cannot be achieved by conventional materials.

The reduction of the cost of fuel-cell bodies, in particular, the cost of separators is indispensable to the full-fledged proliferation of polymer electrolyte fuel cells. It is expected that the present invention advances the full-fledged proliferation of polymer electrolyte fuel cells using metallic separators.

### BRIEF DESCRIPTION OF DRAWINGS

[Figure 1] Figure 1 is a schematic diagram illustrating the structure of a polymer electrolyte fuel cell, where Figure 1(a) is a exploded view of the fuel cell (single cell), and Figure 1(b) is a perspective view of the entire fuel cell.
[Figure 2] Figure 2 is a graph illustrating the results of apparent density measurement.
[Figure 3] Figure 3 is a graph illustrating the behavior of changes in apparent density.
[Figure 4] Figure 4 is a picture illustrating the appearance of a molded body after the press forming.
[Figure 5] Figure 5 is a cross-sectional microscopic picture of a clad steel sheet.

### DESCRIPTION OF EMBODIMENTS

A mode for practicing the present invention will be described.

### 1. Terms Used in Present Invention

### (1-1) M2B boride-based metal precipitates and M23C6 carbide-based metal precipitates

The letter "M" in M2B boride-based metal precipitate (hereinafter, will be also simply referred to as "M2B") and M23C6 carbide-based metal precipitate (hereinafter, will be also simply referred to as "M23C6") represents metallic elements that are not specific metallic elements but metallic elements having strong chemical affinities with B or C. In general, M principally contains Cr and Fe owing to the relation with elements coexisting in steel, and often contains trace quantities of Ni and Mo.

Examples of M2B include Cr2B, (Cr, Fe)2B, (Cr, Fe, Ni)2B, (Cr, Fe, Mo)2B, (Cr, Fe, Ni, Mo)2B, Cr1.2Fe0.76Ni0.04B, and the like.

The index "2" in the notation of M2B means that M2B satisfies a stoichiometric relation in which (Cr in mass %/Cr in atomic weight + Fe in mass %/Fe in atomic weight + Mo in mass %/Mo in atomic weight + Ni in mass %/Ni in atomic weight + X in mass %/X in atomic weight)/(B in mass %/B in atomic weight) makes about 2 between Cr, Fe, Mo, Ni, and X that are metallic elements in borides (here, X is in-steel metallic elements other than Cr, Fe, Mo, and Ni) and the amount of B. Note that this notation system is not special but a very normal notation method. When the amount of C in steel is large, Cr carbides such as M23C6 may also precipitate in addition to M2B borides. The Cr carbides such as M23C6 are all excellent in conductivity, and have the effect of reducing contact resistance. In particular, when the Cr carbides precipitate on and around the surfaces of M2B serving as precipitation nuclei, the effect of improving contact resistance is significant. Assume that the notation of M2B boride-based metal precipitates in the present invention includes the case where the Cr carbides precipitate on and around the surfaces of M2B serving as precipitation nuclei.

### (1-2) Surface layer which has a depth of 0.2t from a surface (t is the overall thickness of a steel sheet)

The reason for employing the expression "surface layer which has a depth of 0.2t from a surface (t is the overall thickness of a steel sheet)" is that a stainless steel sheet for a polymer electrolyte fuel cell separator according to the present invention includes not only a "single" starting material in which M2B are dispersed but also the case of a "two-layer clad" in which only a single surface has a surface layer constituted by a starting material containing M2B dispersed, and the case of a "three-layered-clad steel sheet" in which both surfaces have surface layer constituted by a starting material containing M2B dispersed. In both of the clad steel cases, a clad core portion is desirably a starting material having a component that disallows M2B to be dispersed, in consideration of formation workability. Specific examples for a core material include conventional steels such as SUS316L, 304, and 444 equivalents.

### (1-3) Volume ratio, sphere-equivalent diameter, and volumetric-basis particle-size frequency distribution of M2B boride-based metal precipitate

The volume ratio of M2B boride-based metal precipitates means the two-dimensional surface occupancy (%) of the M2B boride-based metal precipitates that is obtained by performing image analysis on a surface subjected to surface etching in a thickness direction using a ferric chloride (iron chloride (III)) solution at 46°Be' (Baume) in terms of a specific gravity that is defined by an indication on a Baume's hydrometer (here, a concentration is to be defined).

The sphere-equivalent diameter and the volumetric-basis particle-size frequency distribution are based on grain size measured values obtained by performing the laser diffraction/scattering method on precipitates that are extracted by the electrolytic method in a 10 v/v% acetylacetone-1 mass% tetramethylammonium chloride-methanol solution (called 10%AA electrolyte). To separate residues, use is made of a Nuclepore membrane (trade name) a filter diameter of 0.05 micrometer.

Grain size distribution measurement is performed using laser diffraction/light scattering particle counter LA-700 from HORIBA, Ltd.

### (1-4) Density

Densities are measured by the Archimedes' method. In the steel sheet according to the present invention, there are a great many M2B dispersed in steel, and thus a density behavior different from that of a rolled steel material of a conventional stainless is recognized.

Specifically, in the middle of a cold rolling step, there is a behavior in which a large number of inner voids (vacancies) occur inside a steel material, in particular around M2B because M2B are crushed, and the density of a starting material remarkably decreases. If the inner residual voids are in an end product, the inner residual voids serve as starting points of plate-penetrating cracks when the steel sheet according to the present invention is subjected to press forming into a fuel cell separator, and the plate-penetrating cracks cause heavy pressing cracks, which makes the application difficult. For this reason, the inner voids occurring in the middle of the cold rolling need to be completely closed by the deformation of a parent phase in the middle of the cold rolling before the steel material reaches a product plate thickness as being set.

In the present invention, real density and apparent density that are measured by the Archimedes' method are taken as measurable management indicators to evaluate the amount of inner residual voids.

Here, the real density refers to density that is calculated in the state where no voids are present inside a starting material, and the apparent density refers to density that is calculated with the volume of voids occurring inside the starting material included in a volume in the calculation of the density. A starting material in the measurement of the real density, which serves as a reference is a hot rolling coil that is heated to and retained at a temperature of 800°C or higher and 1250°C or lower, and annealed, and in which no inner voids are observed, or a material that include no void therein after the material is heated and melted by the Levitation method in a high-purity hydrogen gas atmosphere at 99.999 vol% or more, and thereafter rapidly cooled.

### 2. Reasons for Limiting Matters Specifying Invention in Present Invention

### (2-1) Volume ratio of M2B boride-based metal precipitates

As described above, in the present invention, the volume ratio of M2B boride-based metal precipitates is set at 8% or higher, the M2B boride-based metal precipitates being contained in a sheet outer layer portion which has a depth of a ratio of 0.2 from a sheet surface in the thickness direction, assuming a sheet thickness to be 1.

Containing B at 0.5% in steel increases this volume ratio to 8% or higher. By setting the volume ratio at roughly 10% or higher, it is possible to obtain a very stable surface contact resistance value as a polymer electrolyte fuel cell separator, although it depends on how M2B are crushed and dispersed.

### (2-2) Sphere-equivalent diameter of M2B boride-based metal precipitates

The particle shapes of M2B boride-based metal precipitates that precipitate in steel and are crushed in a forging step, a rolling step, and the like are not those such as spheres or cubes that can be expressed simply and quantitatively, but have complex and irregular shapes, and the particle sizes cannot be defined directly. Thus, in the present invention, an indirect definition called "sphere-equivalent diameter", which is generally used in the discussion of a grain size distribution, is used to define the size of particles of the M2B boride-based metal precipitates. The sphere-equivalent diameter is a common expression.

The particle size in the present invention are defined by a measuring method using the laser diffraction/scattering method, and a sphere-equivalent diameter of 1 µm indicates that a particle shows the same pattern of diffracted/scattered light as the pattern of a sphere having a diameter of 1 µm.

In the present invention, this sphere-equivalent diameter is set at 6.72 µm or shorter. To obtain the performance set as an objective of the present invention, it is extremely important how to disperse fine particles having sphere-equivalent diameters of 1 to 3 µm as actual values, as many as possible. The distribution of particle sizes has a statistical width. For this reason, in consideration of the distribution of particle sizes, the sphere-equivalent diameter is set at 6.72 µm or shorter. This is a proper value empirically confirmed through repeated prototyping. According to the finding by the inventors obtained in practicing the present invention, the limit of M2B grain refining provided by cold rolling is about 1 µm in terms of sphere-equivalent diameter. That is, fine particles having sphere-equivalent diameters of less than 1 µm occur at a rate substantially undetectable.

### (2-3) Volumetric-basis particle-size frequency distribution of M2B boride-based metal precipitate

Grain size distribution is an index (expression means) indicating that particles of what size (particle size) are included with what percentage (a relative particle amount to 100% as the whole). In the present invention, the reference of particle amount is volumetric basis and number basis, and the definition is made on volumetric basis.

In addition, use is made of a frequency distribution in which a range of particle size to be a subject is divided into particle-size segments, and a particle amount present in each of the particle-size segments is expressed percentagewise. This is equivalent to cumulative distribution (minus sieve). A most desirable range for an actual value in the examples in the present invention is that particles having sphere-equivalent diameters of 6.72 µm or less account for 99.5% or more. This is a proper value empirically confirmed through repeated prototyping.

### 3. Chemical Component

### [0.005% or more and 0.2% or less (in austenitic stainless steels), 0.001% or more and 0.15% or less (in ferritic stainless steels)]

C is contained at 0.005% or more and 0.2% or less in austenitic stainless steels, and contained at 0.001% or more and 0.15% or less in ferritic stainless steels.

C (carbon) may precipitate in steel in the form of Cr carbides such as M23C6 principally containing Cr, although this depends on the steel micro-structure and the composition of a parent phase, in particular on the amount of Cr in steel. The Cr carbides may be finely dispersed and precipitate in grains, or may precipitate on and around surfaces of M2B precipitating at the time of solidification serving as precipitation nuclei, or precipitate on grain boundaries. In all of the precipitation forms, when being exposed on an outermost surface and protrudes, the Cr carbides have an effect of remarkably reducing the contact electric resistance of a stainless steel surface covered with a passivation film. This is because the M23C6 carbides have a metallic nature, and have electric conductivities better than those of the parent phase and a passivation film on M2B surfaces. To obtain such an effect, C is contained at 0.005% or more in austenitic stainless steels, and is contained at 0.001% or more in ferritic stainless steels.

M23C6 precipitate along the grain boundaries and may cause intergranular corrosion. Whether or not to secure intergranular corrosion resistance in a polymer electrolyte fuel cell can be easily checked by an intergranular corrosiveness evaluation test method such as the copper sulfate-sulfuric acid test defined in JIS G-0575. The intergranular corrosiveness should not occur. Consequently, the content of C is set at 0.2% or less for austenitic stainless steels, and 0.15% or less for ferritic stainless steels.

### [Si: 0.01 to 1.5%]

Si (silicon) is an effective deoxidizing element like A1 in a volume-produced steel. A content of Si less than 0.01% results in an insufficient deoxidation, and on the other hand, a content of Si more than 1.5% results in a decreased formability. Thus, the content of Si is set at 0.01% or more and 1.5% or less.

### [Mn: 0.01% or more and 2.5% or less (in austenitic stainless steels), and 0.01% or more and 1.0% or less (in ferritic stainless steels)]

Mn (manganese) has the property of immobilizing S (sulfur) in steel in the form of Mn sulfides and has an effect of improving hot workability. Mn is an effective austenite stabilizing element in an austenitic stainless steel, and thus contained at 0.01% or more and 2.5% or less and contained at 0.01% or more and 1.0% or less in ferritic stainless steels.

### [P: 0.035% or less]

P (phosphorus), as well as S (sulfur), is one of the most hazardous impurities. The lower the content of P is, the more desirable it is, and the content of P is set at 0.035% or less.

### [S: 0.01% or less]

The content of S (sulfur) in steel is set at 0.01% or less. S, as well as P, is one of the most hazardous impurities, and the lower the content of P is, the more desirable it is. Most of S in steel precipitates in the form of Mn sulfides, Fe sulfides, or composite nonmetallic precipitates with composite sulfides of these sulfides and composite oxides of these sulfides, depending on coexisting elements in steel and in proportion to the content of S in steel. However, in the environment of a separator of a polymer electrolyte fuel cell, every such composition nonmetallic precipitate acts as a starting point of corrosion, while differing in degree, and is harmful to maintaining a passivation film and suppressing the corrosion of the passivation film. While the content of S in normal volume-produced steel is more than 0.005% and up to about 0.008%, the content of S is desirably reduced to 0.004% or less to reliably prevent the harmful influence described above. A more desirable content of S is 0.002% or less, and the most desirable content of S is less than 0.001%. The lower the content of S is, the better it is. With the present refining technique, making the content of S less than 0.001% at an industrial volume-production level causes only a slight increase in producing costs.

### [Cr: 16.0 to 30.0% (in austenitic stainless steels), 22.5 to 35.0 (in ferritic stainless steels)]

Cr (chromium) is a basic alloying element extremely important to secure the corrosion resistance of a base metal. The higher the content of Cr is, the higher the resultant corrosion resistance is.

In austenitic stainless steels, the lower limit of the content of Cr is set at 16.0%, and the upper limit thereof is set at 30.0%. Meanwhile, in ferritic stainless steels, a content of Cr exceeding 35.0% makes production on a volume-production scale difficult, and a content of Cr less than 22.5% makes it difficult to secure a corrosion resistance necessary for separators even when the contents of other elements are changed.

### [Mo: 7.0% or less (in austenitic stainless steels), 6.00% or less (in ferritic stainless steels)]

Mo (molybdenum) has an effect of improving the corrosion resistance with a small quantity in comparison with Cr. The inside of a polymer electrolyte fuel cell is a harsh environment as a corrosive environment. For this reason, in ferritic stainless steels, it suffices to contain Mo at a content of 6% or less. Containing Mo at more than 6.0% makes it difficult to avoid the precipitation of an intermetallic compound such as a sigma phase in the production, and the production becomes difficult owing to the problem of embrittlement of steel. Meanwhile, in austenitic stainless steels, the upper limit of the content of Mo is set at up to 7.0%.

In addition, as a property of Mo, even if Mo in steel is dissolved owing to corrosion occurring inside a polymer electrolyte fuel cell, the dissolution has a relatively minor influence on the performance of an MEA. This is because Mo is present not in the form of a cation but in the form of a molybdic acid ion, which is an anion, so that Mo has a little influence on the cation conductivity of a fluorocarbon-type ion-exchange resin membrane with a hydrogen ion (proton) exchange group. The lower limit of the content of Mo is preferably set at 1.5% for austenitic stainless steels and is preferably set at 0.3% for ferritic stainless steels. If the content of Mo falls below these values, the effect of the addition of Mo may be obscured.

### [Calculated value of [Cr%] + 3 × [Mo%] - 2.5 × [B%] - 17 × [C%]: 24.0 to 45.0%]

When Cr carbides precipitate, the concentration of Cr contributing to the enhancement of corrosion resistance in a parent phase decreases in comparison with the concentration of Cr in a steel melting stage, and corrosion resistance may decrease. Consequently, to secure corrosion resistance inside a polymer electrolyte fuel cell, the calculated value needs to be set at 24.0% or more and 45.0% or less.

### [Ni: 7.0 to 50.0% (in austenitic stainless steels), 0.01 to 6.0% (in ferritic stainless steels)]

Ni (nickel) is an austenite forming element, and thus the content of Ni is set at 7.0% or more and 50.0% or less for austenitic stainless steels.

In addition, Ni is an element that improves corrosion resistance and toughness in ferritic stainless steels, and thus the content of Ni is set at 0.01% or more and 6.0% or less. A content of Ni more than 6.0% makes it difficult to produce a ferritic singe-phase metal micro structure even when thermal treatment is performed industrially. When the metal micro structure is a duplex micro-structure of a ferritic phase and an austenite phase, the steel sheet according to the present invention, which is a rolled material, shows a directivity in its formability and is unsuitable for a steel sheet for a polymer electrolyte fuel cell separator.

### [Cu: 0.01 to 3.0% (in austenitic stainless steels), 0.01 to 1.0% (in ferritic stainless steels)]

Cu (copper) is an austenite forming element. Cu is contained at 0.01% or more and 1.0% or less in ferritic stainless steels. A content of Cu more than 1% leads to a reduction in hot workability, which makes it difficult to secure volume productivity. Meanwhile, for austenitic stainless steels, the content of Cu is set at 0.01% or more and 3.0% or less. A content of Cu more than 3.0% may result in a decrease in corrosion resistance. Cu needs to be dissolved in a parent phase. When Cu is dispersed in the form of metallic precipitates, they serve as starting points of corrosion in a fuel cell, leading to degradation in cell performance.

### [N: 0.001 to 0.4% (in austenitic stainless steels), 0.06% or less (in ferritic stainless steels)]

N is a most inexpensive austenite forming element. In austenitic stainless steels, N is contained at 0.001% or more and 0.4% or less. Containing N at more than 0.4% leads to a remarkable decrease in productivity as well as a significant decrease in sheet workability. Meanwhile, for ferritic stainless steels, N is an impurity. N degrades normal temperature toughness, and thus the upper limit of the content of N is set at 0.06%. The lower the content of N is, the more desirable it is. From an industrial viewpoint, the content of N is desirably set at 0.01% or less.

### [V: 0.01 to 0.3% (in ferritic stainless steels)]

V (vanadium) is not an addition element to be intentionally added but is inevitably contained in a Cr source that is added as a melted raw material in volume production. For this reason, in the austenitic stainless steel sheet according to the present invention, V is contained as an impurity, and an allowable content thereof is up to 0.3%. Meanwhile, in the ferritic stainless steel sheet according to the present invention, V has an effect of improving normal temperature toughness and thus is contained at 0.01% or more and 0.3% or less as an essential element.

### [B: 0.50 to 3.0%]

B (boron), as well as C, is an important element in the steel sheet according to the present invention, and the content of B is set at 0.5% or more and 3.0% or less. Almost all of B added in the steel melting stage precipitate in the form of M2B borides at the time of solidification by eutectic reaction. The lower limit of the content of B is set at 0.50% at which a desired performance for the steel sheet according to the present invention is obtained, and the upper limit thereof is set at 3.0% at which productivity starts to decrease significantly.

### [Al: 0.001 to 0.2% (in austenitic stainless steels), 0.001 to 6.0% (in ferritic stainless steels)]

Al (aluminum) is added in a steel melting stage as a deoxidizing element. In the case of containing B in the steel sheet according to the present invention, B is an element a high bonding strength with oxygen in molten steel, and thus it is necessary to decrease an oxygen concentration in molten steel by deoxidation with Al. Consequently, in austenitic stainless steels, Al is contained at 0.001% or more and 0.2% or less, and in ferritic stainless steels, Al is contained at 0.001% or more and 6.0% or less.

In the steel sheet according to the present invention, the following optional addition elements may be further contained.

### [W: 0 to 4.0%, Sn: 0 to 3.0%]

W (tungsten) is an element that improves corrosion resistance and may be contained at up to 4.0% as its upper limit of content, as necessary. Containing W at more than 4.0% leads to a decreased workability. Even if W is dissolved owing to corrosion, W is present not in the form of a cation but in the form of a tungstic acid ion, which is an anion, as with Mo. W has a property of having a little influence on the cation conductivity of a fluorocarbon-type ion-exchange resin membrane with a hydrogen ion (proton) exchange group.

To allow W to exert such an action, the content of W is preferably 0.01% or more. Sn has a function of improving corrosion resistance performance in a polymer electrolyte fuel cell, which is in a sulfuric acid condition, and thus Sn may be contained at up to 3.0% as its upper limit of content. To allow Sn to exert such an action, the content of Sn is preferably 0.01% or more.

### [Rare earth metals: 0 to 0.1%]

The rare earth metals are called misch metal and have an effect of improving hot productivity. For this reason, the rare earth metals may be contained at up to 0.1% as the upper limit of the content of the rare earth metals. To allow the rare earth metals to exert such an action, the content of the rare earth metals is preferably 0.001 % or more.

The balance other than the elements described above is Fe and impurities.

### 4. Density

The density in the present invention is density measured by the Archimedes' method. While normal stainless steel sheets do not experience a large change in density in a sheet producing process, the steel sheet according to the present invention may experience a large decrease in density owing to inner voids occurring with crushing of M2B. A starting material having a decreased density significantly decreases in ductility and normal temperature toughness, is prone to give rise to coil rupture, end face edge cracking, and perforation in the sheet producing process, and is prone to give rise to a pressing crack during press forming as a fuel cell separator. To stably secure the performance of the steel sheet according to the present invention as a stainless starting material for a solid-electrolyte fuel cell separator, it is effective to use an index that is easy-to-use for quantitative evaluation of the presence/absence and residue of inner voids. Thus, density is used in the present invention.

Real density and apparent density are taken as the density. The real density refers to density that is calculated in the state where no voids are present inside a starting material, and the apparent density refers to density that is calculated with the volume of voids occurring inside the starting material included in a volume in the calculation of the density. As the real density, which serves as a reference, use is made of the density of a hot rolling coil that is heated to and retained at a temperature of 800°C or higher and 1250°C or lower, and annealed, and in which no inner voids are observed, or the density of a starting material in which voids are absent therein after the starting material is heated and melts by the Levitation method in a high-purity hydrogen gas atmosphere at 99.999 vol% or more, and thereafter subjected to rapid cooling.

To secure press formability for a fuel cell separator, the apparent density equal to or higher than 0.995 is needed, assuming the real density to be 1. The value of apparent density/real density that is the ratio of apparent density to real density is expressed as density ratio.

The density is controllable at a volume production level by setting and controlling a cold rolling condition to be described next, and by annealing performed after cold rolling.

### 5. Cold Rolling

In performing cold rolling, it is important to choose (a) roll diameter, (b) roll material, (c) roll surface, (d) rolling oil, (e) rolling tension, (f) rolling speed, (g) rolling reduction, (h) temperature, and the like.

The crushing of M2B proceeding in the cold rolling step, an increase in inner voids, a reduction in and disappearance of inner voids by parent phase deformation are influenced by shearing stress distribution in the thickness direction and rolling tension immediately below a work roll of a cold rolling machine during the cold rolling, the hardness of a starting material, and the behavior of work hardening.

As the control in an actual production, control is performed on the crushing of M2B and inner voids by the adjustment of rolling oil, rolling reduction allocation, rolling tension, and work roll diameter. To practice the present invention, the setting of a work roll diameter is particularly important. This is because the work roll diameter, as well as rolling tension, has a very great influence on the crushing behavior of M2B and the density control of the rolled material. The shearing stress distribution of a starting material in a thickness direction immediately below the work roll changes in accordance with the size of a work roll diameter to be applied, and the crushing (grain refining) behavior of M2B changes, although this depends on the ratio between the work roll diameter and a sheet thickness. There is a behavior in which, when a work roll diameter for the cold rolling is a small diameter, the crushing (grain refining) of M2B and an increase in inner voids are prone to rapidly proceed, and when the diameter is a large diameter, the crushing (grain refining) of M2B is prone to slowly proceed, and a decrease in inner voids quickly proceeds.

As an additional description, while the work roll diameter itself is important, what is important is the size relation between a work roll diameter used in a rolling chance intended to be executed and a work roll diameter used in a rolling chance executed prior to the intended rolling chance. In particular, the size relation between the work roll diameter used in the intended rolling chance and a work roll diameter used immediately before the intended rolling chance is important. When the work roll diameter is changed to a smaller diameter, the crushing (grain refining) of M2B proceeds, which gives rise to an increase in inner voids and a decrease in apparent density. When the work roll diameter is changed to a larger diameter, the crushing (grain refining) of M2B proceeds slowly, which gives rise to a decrease in inner voids and a rise in apparent density. In other words, assuming that the work roll diameter changes from φ₁ to φ₂, when the ratio thereof φ₂/φ₁ is smaller than 1, the crushing (grain refining) of M2B proceeds, which gives rise to an increase in inner voids and a decrease in apparent density, and when the ratio is larger than 1, the crushing (grain refining) of M2B proceeds slowly, which gives rise to a decrease in inner voids and a rise in apparent density. In addition, the history of applied work roll diameters is also important. The proceeding of the crushing (grain refining) of M2B, an increase or decrease in inner voids, and the behavior of apparent density reflects the accumulation of the rolling results with a work roll diameter and a rolling condition used in each cold rolling step executed thus far.

The present inventors conceived the method of managing the crushing (grain refining) of M2B and the amount inner residual voids by managing work roll diameters themselves used in corresponding to rolling operations and the size history of the work roll diameters used in corresponding to the rolling operations, while managing a work roll diameter itself applied in each rolling operation and at the same time managing changes in the apparent density of a material to be rolled with respect to the real density of the material.

That is, cold rolling for a coil sheet thickness of less than 2 mm is prone to remarkably reflect the influence of the accumulation of the rolling results. In other words, in performing cold rolling on a starting material having a sheet thickness of less than 2 mm, when the rolling is performed with the selection of a work roll diameter that leads to an increase in the crushing (grain refining) of M2B and in the amount of inner residual voids, it is difficult to restore the apparent density to the real density in a subsequent step. In performing the cold rolling to a sheet thickness of less than 2 mm, it is important at least to apply a work roll having a diameter larger than a work roll diameter applied in cold rolling to a sheet thickness of up to 2 mm. These behaviors are the fact found by the present inventors.

Next, the factors other than the work roll diameter of a cold rolling machine will be described.

### (b) Roll material

The roll material, as well as the specification of the roll surface, influences the crushing (grain refining) of M2B. The harder the roll material is, the easier the crushing (grain refining) of M2B proceeds. However, the purchase cost of a roll itself and the cost of conditioning the roll surface increase. Thus, the roll material may be chosen as appropriate.

### (c) Roll surface

The roll surface influences the crushing (grain refining) of M2B, in particular the crushing (grain refining) of M2B in an outer layer of a starting material. The roll surface wears out to change in the middle of the rolling and thus may be managed as appropriately.

### (d) Rolling oil

The rolling oil influences the crushing (grain refining) of M2B in association with the rolling speed, the temperature, and the like, and may be chosen as appropriate as necessary.

### (e) Rolling tension,(f) Rolling speed

The rolling tension during the cold rolling, as well as the work roll diameter, significantly influences the crushing (grain refining) behavior of M2B. As a tension on a delivery side of the rolling machine is increased, inner voids of the steel sheet according to the present invention is more prone to occur, which makes a decrease in density easier to occur and delays the restoration of the density. Meanwhile, when the tension is excessively low, the rolling itself cannot be performed, and when the tension is excessively high, perforation of coil, edge cracking of a coil end face, and coil rupture are prone to occur. An allowable rolling tension in the rolling is influenced by the roll diameter, the sheet thickness, the roll surface, the rolling oil, the rolling speed, and the rolling reduction. In the present invention, the rolling tension may be chosen as appropriate so as not to be excessively high. For example, in a first rolling pass at the start of the cold rolling, the rolling delivery side tension may be set at 5 kg/mm², which is an allowable lower limit in the rolling, and may be increased as the number of rolling passes increases and managed so that the rolling delivery side tension is 35 kg/mm² or lower at the maximum.

### (g) Rolling reduction

As for the rolling reduction, a rolling reduction for each pass of the cold rolling matters in controlling the crushing (grain refining) of M2B. The rolling reduction influences the crushing (grain refining) behavior of M2B and the behavior of the density recovery while being influenced by the behavior of work hardening of a starting material. The rolling reduction may be chosen as appropriate because the rolling reduction is influenced by the properties of the starting material.

### (h) Temperature

The temperature may be any temperature as long as it allows the rolling, and the temperature may be chosen as appropriate.

Furthermore, description will be made about the case where the steel sheet according to the present invention is a single-sided clad and a double-sided clad. In a clad, the rolling is performed with two, or three or more of starting materials tightly fit. Allocation of load stress to each starting material in the starting materials, shearing stress occurring in the interface between starting materials, and shearing stress distribution occurring in the starting materials change while being influenced by deformability of each starting materials, starting material properties such as hardness, a starting material component ratio (clad ratio), and the like. A region with a high shearing stress is prone to allow the crushing (grain refining) of M2B to proceed. The conditions may be properly adjusted in conformity of each starting material.

### 6. Ferritic Stainless Steel sheet according to Present Invention

Next, supplementary description will be made about a ferritic stainless steel sheet, of the steel sheet according to the present invention.

### (6-1) Ferritic slab treatment

As is well-known, when a continuously cast slab of a high-purity ferritic stainless steel is allowed to be cooled to a normal temperature after casting, rupture occurs in the form of division of the slab at intervals of about 2 m in a longitudinal direction owing to the occurrence of a thermal stress and inner cracks by the difference in temperature between the surface of the slab and the inside of the slab, even when the slab has several hundred millimeters in thickness, except for the case where the slab has an extremely small slab thickness.

As a measure against this rupture, a continuously cast slab made up of a ferritic stainless steel is subjected to hot forging or hot rough rolling working at a forging ratio of 25% or higher in terms of slab thickness after being reheated in a heating furnace at a temperature of 1000°C or higher and 1230°C or lower without undergoing the state where the surface temperature of the slab is 300°C or lower. In other words, slab cracking is avoided by breaking and recrystallizing a solidification micro structure inside the continuously cast slab through the hot forging or the hot rough rolling to disperse the concentration of thermal stresses that leads to the division of the slab. A technique the same as this measure is applied to a continuously cast slab for the ferritic stainless steel sheet according to the present invention.

### (6-2) Hot direct rolling

In the volume production of the ferritic stainless steel sheet according to the present invention on an industrial scale, a rolling method that is considered to be a most efficient is a method in which a heat rolled coil that can be expanded at a normal temperature while cracking of continuously cast slab is avoided, by a technique called hot direct rolling. That is, a continuously cast slab made up of a ferritic stainless steel is reheated to 1000°C or higher and 1230°C or lower, and retained and soaked, without undergoing the state where the surface temperature of the slab is 300°C or lower, and without undergoing both of a hot forging step and hot rough rolling working, and thereafter the temperature of a final pass in the hot rolling is set at 900°C or higher in terms of coil surface temperature, and a final finishing sheet thickness is set at 2.5 mm or smaller and 1.2 mm or larger. This producing method yields a heat rolled coil that can be expanded at a normal temperature.

The heating temperature of the slab needs to be 1000°C or higher and 1230°C or lower. A heating temperature of 1000°C or lower makes it difficult to perform and complete desired operation owing to a problem of a temperature drop, and a heating temperature of more than 1230°C makes desired work difficult owing to M2B in steel softened or partially melted.

### 7. Method for forming M23C6-M2B-coexisting metal precipitates

Next, a method for controlling the precipitation of M23C6 composite conductive metal precipitates including M2B serving as precipitation nuclei will be described.

In order for M23C6 to precipitate on and around the surfaces of M2B serving precipitation nuclei, an effective treatment is to perform precipitation control in which all or part of M23C6 precipitating in a cooling process subsequent to ingot-making into a continuously cast slab are once dissolved in a parent phase, and thereafter M23C6 are caused to reprecipitate on and around the surfaces of precipitating M2B.

In order to dissolve M23C6 in the parent phase, it may suffice to heat and retain the continuously cast slab to a temperature range within which M23C6 are dissolved. Note that the dissolution and the reprecipitation behavior of M23C6 precipitating in the steel sheet according to the present invention are influenced by the composition of the parent phase.

That is, in the case of a component system in which a ferritic phase is stable up to the solidifying point temperature of a steel sheet, and no austenite phase is generated, a change in precipitation amount and a change in composition of M23C6 are small, and thus the precipitation control on M23C6 is difficult to perform.

Meanwhile, in the case of a component system in which an austenite phase is generated in a high-temperature range at 900°C or higher, for example, a temperature range for performing hot forging and hot rolling, causing a ferrite-austenitic duplex micro-structure, M23C6 dissolved in an austenite phase reprecipitate in the form of M23C6 in a new ferritic phase (prior-austenite phase) produced in the cooling process, and thus the precipitation control is easy to perform.

In the case of performing precipitation control on M23C6 composite conductive metal precipitates including M2B serving as precipitation nuclei, the chemical component of the steel sheet according to the present invention is desirably of a chemical component system in which an austenite phase is generated in a high-temperature range of 900°C or higher being the temperature range for performing hot forging and hot rolling causing a ferrite-austenitic duplex micro-structure.

Next, the effects of the present invention will be specifically described by way of Examples.

### EXAMPLE

### Example 1

Austenitic stainless steels having the components shown in Table 1 and ferritic stainless steels having the components shown in Table 2 were used. The underlines in Table 1 and 2 indicate that underlined values fall out of the range specified in the present invention, and the term REM indicates misch metal (rare earth metals). Index(%) satisfies Index(%) = [Cr%] + 3 × [Mo%] - 2.5 × [B%] - 17 × [C%].

**[Table 1]**

| STEEL MATERIAL | | CHEMICAL COMPOSITION (MASS % BALANCE Fe AND IMPURITIES) | | | | | | | | | | | | | | | | |
|---|---|---|---|---|---|---|---|---|---|---|---|---|---|---|---|---|---|---|
| | | C | Si | Mn | P | S | Cr | Mo | Ni | Cu | N | V | B | Al | W | Sn | REM | Index |
| 1 | INVENTIVE EXAMPLE | 0.021 | 0.52 | 1.07 | 0.022 | 0.002 | 25.3 | 2.24 | 10.6 | 0.02 | 0.015 | 0.10 | 0.62 | 0.010 | <0.01 | 0.26 | <0.01 | 30.1 |
| 2 | INVENTIVE EXAMPLE | 0.086 | 0.52 | 1.05 | 0.024 | 0.001 | 25.6 | 2.21 | 10.5 | 0.28 | 0.016 | 0.10 | 0.63 | 0.008 | <0.01 | <0.01 | <0.01 | 29.2 |
| 3 | INVENTIVE EXAMPLE | 0.120 | 0.51 | 1.08 | 0.022 | 0.001 | 25.1 | 2.23 | 11.0 | 0.27 | 0.014 | 0.11 | 0.61 | 0.011 | <0.01 | <0.01 | <0.01 | 28.2 |
| 4 | INVENTIVE EXAMPLE | 0.022 | 0.51 | 1.08 | 0.024 | 0.002 | 28.6 | 2.24 | 11.1 | 0.80 | 0.013 | 0.12 | 0.62 | 0.083 | <0.01 | <0.01 | <0.01 | 33.4 |
| 5 | INVENTIVE EXAMPLE | 0.023 | 0.52 | 1.51 | 0.021 | 0.002 | 26.4 | 2.22 | 10.5 | 0.28 | 0.023 | 0.12 | 0.62 | 0.020 | 3.05 | <0.01 | <0.01 | 31.1 |
| 6 | INVENTIVE EXAMPLE | 0.021 | 0.51 | 1.52 | 0.021 | 0.002 | 26.4 | 2.23 | 10.6 | 0.27 | 0.022 | 0.11 | 0.63 | 0.022 | <0.01 | 2.3 | <0.01 | 31.2 |
| 7 | INVENTIVE EXAMPLE | 0.023 | 0.50 | 1.10 | 0.023 | 0.001 | 27.6 | 6.02 | 35.1 | 0.35 | 0.006 | 0.15 | 0.62 | 0.021 | <0.01 | <0.01 | 0.02 | 43.7 |
| 8 | INVENTIVE EXAMPLE | 0.022 | 0.51 | 1.08 | 0.020 | 0.002 | 26.3 | 2.21 | 11.0 | 0.28 | 0.022 | 0.11 | 0.62 | 0.022 | <0.01 | <0.01 | <0.01 | 31.0 |
| 9 | INVENTIVE EXAMPLE | 0.021 | 0.52 | 1.02 | 0.022 | 0.002 | 26.5 | 2.21 | 11.2 | 0.28 | 0.025 | 0.10 | 0.81 | 0.021 | <0.01 | <0.01 | <0.01 | 30.7 |
| 10 | INVENTIVE EXAMPLE | 0.020 | 0.53 | 1.08 | 0.021 | 0.001 | 26.4 | 2.23 | 11.5 | 0.30 | 0.023 | 0.09 | 1.02 | 0.023 | <0.01 | <0.01 | <0.01 | 30.2 |
| 11 | COMPARATIVE EXAMPLE | 0.003 | 0.51 | 1.07 | 0.023 | 0.003 | 26.3 | 2.22 | 11.0 | 0.30 | 0.015 | 0.10 | 0.001 | 0.018 | <0.01 | <0.01 | <0.01 | 32.9 |
| 12 | COMPARATIVE EXAMPLE | 0.021 | 0.52 | 1.06 | 0.022 | 0.001 | 19.6 | 2.20 | 11.2 | 0.32 | 0.014 | 0.09 | 0.48 | 0.015 | <0.01 | 0.25 | <0.01 | 24.6 |
| 13 | COMPARATIVE EXAMPLE | 0.022 | 0.51 | 1.08 | 0.023 | 0.001 | 22.3 | 2.22 | 11.0 | 0.30 | 0.016 | 0.08 | 3.10 | 0.017 | <001 | <0.01 | <0.01 | 20.8 |
| 14 | COMPARATIVE EXAMPLE | 0.021 | 0.50 | 1.07 | 0.026 | 0.001 | 18.6 | 1.85 | 10.5 | 0.30 | 0.015 | 0.09 | 0.62 | 0.021 | <001 | <0.01 | <0.01 | 22.2 |
| 15 | COMPARATIVE EXAMPLE | 0.023 | 0.52 | 1.06 | 0.025 | 0.002 | 27.8 | 6.62 | 35.0 | 0.31 | 0.016 | 0.05 | 0.61 | 0.019 | <0.01 | <0.01 | 0.03 | 45.7 |

**[Table 2]**

| STEEL MATERIAL | | CHEMICAL COMPOSITION (MASS % BALANCE Fe AND IMPURITIES) | | | | | | | | | | | | | | | | |
|---|---|---|---|---|---|---|---|---|---|---|---|---|---|---|---|---|---|---|
| | | C | Si | Mn | P | S | Cr Mo | | Ni | Cu | N | V | B | Al | W | Sn | REM | Index |
| 16 | INVENTIVE EXAMPLE | 0.005 | 0.25 | 0.35 | 0.023 | 0.002 | 26.2 | 2.05 | 0.12 | 0.02 | 0.006 | 0.08 | 0.61 | 0.018 | <0.01 | <0.01 | <0.01 | 30.7 |
| 17 | INVENTIVE EXAMPLE | 0.058 | 0.25 | 0.36 | 0.023 | 0.002 | 27.1 | 2.02 | 0.10 | 0.07 | 0.008 | 0.11 | 0.62 | 0.019 | <0.01 | <0.01 | <0.01 | 30.6 |
| 18 | INVENTIVE EXAMPLE | 0.080 | 0.26 | 0.35 | 0.022 | 0.001 | 27.1 | 2.03 | 0.25 | 0.08 | 0.005 | 0.10 | 0.63 | 0.019 | <0.01 | <0.01 | <0.01 | 30.3 |
| 19 | INVENTIVE EXAMPLE | 0.059 | 0.25 | 0.34 | 0.028 | 0.002 | 29.6 | 4.01 | 2.1 | 0.82 | 0.006 | 0.15 | 0.61 | 0.245 | <0.01 | <0.01 | <0.01 | 39.1 |
| 20 | INVENTIVE EXAMPLE | 0.091 | 0.26 | 0.35 | 0.026 | 0.001 | 27.3 | 3.21 | 0.33 | 0.09 | 0.006 | 0.18 | 0.62 | 0.020 | 2.02 | <0.01 | <0.01 | 33.8 |
| 21 | INVENTIVE EXAMPLE | 0.090 | 0.26 | 0.35 | 0.018 | 0.002 | 27.3 | 3.12 | 0.34 | 0.08 | 0.004 | 0.12 | 0.62 | 0.020 | <0.01 | 2.3 | <0.01 | 33.6 |
| 22 | INVENTIVE EXAMPLE | 0.092 | 0.51 | 0.35 | 0.018 | 0.002 | 27.2 | 3.20 | 0.33 | 0.06 | 0.005 | 0.11 | 0.63 | 0.022 | <0.01 | <0.01 | 0.02 | 33.7 |
| 23 | INVENTIVE EXAMPLE | 0.062 | 0.50 | 0.81 | 0.016 | 0.001 | 28.3 | 2.82 | 0.33 | 0.05 | 0.004 | 0.12 | 0.62 | 0.021 | <0.01 | <0.01 | <0.01 | 34.2 |
| 24 | INVENTIVE EXAMPLE | 0.060 | 0.51 | 0.80 | 0.017 | 0.002 | 28.2 | 2.72 | 0.34 | 0.05 | 0.003 | 0.13 | 0.80 | 0.022 | <0.01 | <0.01 | <0.01 | 33.3 |
| 25 | INVENTIVE EXAMPLE | 0.059 | 0.52 | 0.82 | 0.018 | 0.002 | 28.2 | 2.81 | 0.32 | 0.05 | 0.003 | 0.10 | 1.01 | 0.021 | <0.01 | <0.01 | <0.01 | 33.1 |
| 26 | COMPARATIVE EXAMPLE | 0.003 | 0.25 | 0.12 | 0.016 | 0.002 | 28.1 | 2.21 | 0.33 | 0.06 | 0.004 | 0.08 | 0.001 | 0.006 | <0.01 | <0.01 | <0.01 | 34.7 |
| 27 | COMPARATIVE EXAMPLE | 0.092 | 0.51 | 0.52 | 0.018 | 0.002 | 28.2 | 3.20 | 0.32 | 0.08 | 0.004 | 0.10 | 0.46 | 0.022 | <0.01 | <0.01 | <0.01 | 35.1 |
| 28 | COMPARATIVE EXAMPLE | 0.089 | 0.52 | 0.51 | 0.017 | 0.001 | 28.1 | 3.21 | 0.22 | 0.06 | 0.003 | 0.08 | 3.05 | 0.112 | <0.01 | <0.01 | <0.01 | 26.6 |
| 29 | COMPARATIVE EXAMPLE | 0.092 | 0.51 | 0.35 | 0.018 | 0.001 | 18.1 | 1.85 | 0.21 | 0.05 | 0.004 | 0.08 | 0.62 | 0.019 | <001 | <0.01 | <0.01 | 20.5 |
| 30 | COMPARATIVE EXAMPLE | 0.090 | 0.50 | 0.36 | 0.016 | 0.001 | 31.6 | 6.02 | 0.23 | 0.06 | 0.004 | 0.06 | 0.60 | 0.021 | <001 | <0.01 | <0.01 | 46.6 |

It was confirmed that the volume ratios of all M2B boride-based metal precipitates are 8% or higher, the M2B boride-based metal precipitates each being contained in a sheet outer layer portion which has a depth of a ratio of 0.2 from a sheet surface in the thickness direction, assuming that a sheet thickness is 1, except for steel materials 11, 12, 14, 15, 26, and 27, which are comparative examples.

A steel material 1 in Table 1 was melted in an 80-ton-scale refinery furnace for stainless steel, and made into a slab having a thickness of 250 mm and a width of 1050 mm, using slab continuous casting equipment. The steel material 1 was subjected to a measure to prevent coil cracking in hot rolling (existing technique) when the steel material 1 was in a slab stage, thereafter charged in a slab heating furnace, heated, soaked, and retained at 1180°C for 6 hours, and made into a hot rolling coil having a sheet thickness of 5.15 mm using a volume-production tandem hot rolling machine.

After high-temperature oxide scales on the surface were removed by a continuous annealing/pickling line used in a normal volume production, the hot rolling coil was subjected to surface grinding by coil grinder conditioning into a coil starting material for cold rolling having a thickness of 4.95 mm through.

A cut-off piece of an end portion of the coil was used and subjected to sheet rolling to have a final sheet thickness of 1.017 mm (a rolling reduction of 79.5%) by a vertical-two-roll 80-ton-laboratory-scale cold rolling machine. Control of the rolling tension was not performed. The diameter of the rolls was 216 mmφ.

A changed- sheet -thickness material for which the sheet rolling was stopped in the middle thereof was annealed with a retention time of 20 minutes at 1080°C, and thereafter the apparent density of each starting material was evaluated by the Archimedes' method. The results of apparent density measurement are illustrated in Figure 2 as a graph.

As illustrated by the graph in Figure 2, the apparent density decreased as the rolling reduction was increased (i.e., the sheet thickness was decreased), reached its minimum at a sheet thickness of 2.524 mm (a rolling reduction of 49.0%), and thereafter increased. Such a behavior is not seen in normal, conventional stainless steel materials. The results of cross-sectional microscopic observation reveals that this behavior is pertinent to proceeding of the crushing of M2B present in steel in large quantities, occurrence of microscopic voids generated around M2B, and reduction and disappearance of the microscopic void owing to matrix deformation, which has been found to be a behavior characteristic of the steel sheet according to the present invention that contains B in large quantities.

If cold working is performed in the state where the microscopic voids generated inside a starting material are left, perforation occurs with the microscopic voids inside the starting material serving as starting points thereof, and the starting material is prone to be cracked or rupture as if is torn up. To secure a sufficient workability for a final sheet starting material, the microscopic voids need to disappear.

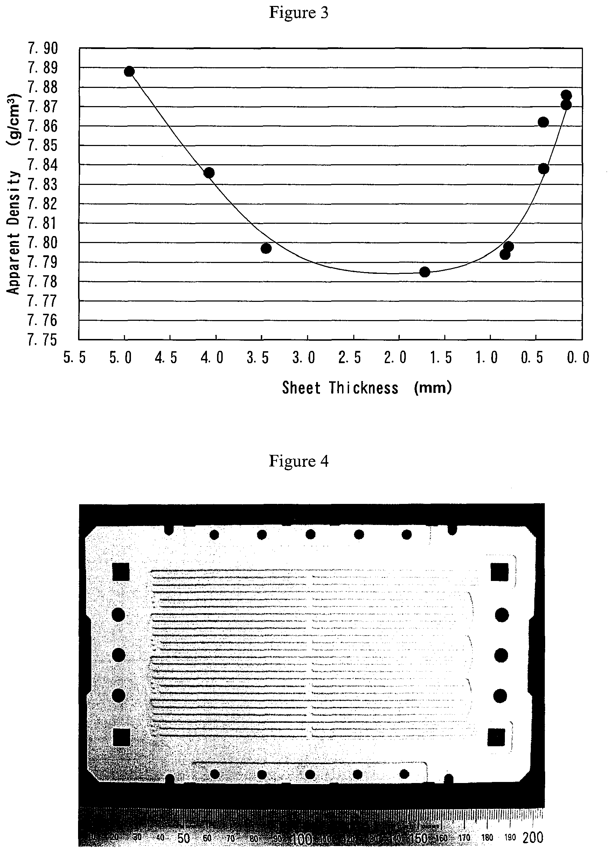

Figure 3 illustrates the behaviors of apparent densities of starting materials that were subjected to cold rollings to have a sheet thickness 0.166 mm, with intermediate annealings interposed therebetween, while using a vertical-20-roll Sendzimir cold rolling machine having a work roll diameter of 54 mmφ and capable of performing the tension control of the starting material mentioned above having a sheet thickness of 4.95 mm, a vertical-four-roll cold rolling machine having a work roll diameter of 250 mmφ, and a vertical-six-roll cold rolling machine having a work roll diameter of 130 mmφ.

As illustrated in Figure 3, assuming that the density of an annealed hot rolling steel material, which is 7.888 g/cm³ and can be considered to be a real density, is 1, the apparent density at a final sheet thickness of 0.166 mm is 7.876/7.888 = 0.998. It can be determined that the microscopic voids had substantially disappeared.

Press formability evaluation was conducted using a die for press formability evaluation that adopts the shape of an actual polymer electrolyte fuel cell separator, and good press formability performances were confirmed. It was confirmed that a desired press formability performance can be secured when the density ratio is 0.998.

The volume ratio of M2B boride-based metal precipitates contained in a sheet outer layer portion which has a depth of a ratio of 0.2 from a sheet surface in the thickness direction were determined by two-dimensional analysis of cross-sectional microstructures. The occupancy was 8.8%. In addition, the surface occupancy (%) that is obtained by performing image analysis on a surface subjected to surface etching in a depth direction using a ferric chloride (iron chloride (III)) solution at 46°Be' (Baume) in terms of a specific gravity that is defined by an indication on a Baume's hydrometer (here, a concentration is to be defined) was determined to be 21%.

Furthermore, the M2B boride-based metal precipitates of this region were extracted by the electrolytic method in a 10 v/v% acetylacetone-1 mass% tetramethylammonium chloride-methanol solution (10%AA electrolyte) and subjected to quantitative evaluation using a grain size measuring method by performing the laser diffraction/scattering method on the precipitates, with the result that the volumetric-basis particle-size frequency distribution of M2B boride-based metal precipitates having sphere-equivalent diameters of 6.72 µm or less was 99.6%. A cell was worked as an actual fuel cell, and a contact resistance value thereof with carbon paper from Toray Industries, Inc. was measured by a four-terminal method in a stress loaded state with a fastening power in stacking and fastening taken into consideration. The contact resistance value at a stress loading of 10 kgf/cm² was 2.00 to 2.20 mΩ cm². It was confirmed that the surface contact resistance value was equivalent to or close to the contact resistance value of a gold-plated material because the contact resistance value of a gold-plated material under the same condition was 2.05 mΩ cm².

### Example 2

In order to confirm the condition to secure the press formability more accurately, the steel material 1 was used, and cold rolling under a plurality of cold rolling conditions was applied. The results of evaluation of fabricated starting materials are collectively shown in Table 3.

**[Table 3]**

| APPLIED MATERIAL: STEEL MATERIAL 1 | | STARTING MATERIAL SHEET THICKNESS (mm) | FINAL SHEET THICKNESS (mm) | APPLIED WORK ROLL DIAMETER (mmφ) AND COLD ROLLING FINISHED SHEET THICKNESS (mm) (INTERMEDIATE ANNEALING AND PICKLING WERE PERFORMED AS NECESSARY. THE MARK "∼" MEANS THAT ROLLING WAS PERFORMED UP TO THE MARKED SHEET THICKNESS) | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY (g/cm³) | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 31 | 1.72 | 0.051 | 54mm φ (∼1.376mm) →250mm φ (∼0.40mm) →25mm φ(∼ FINAL SHEET THICKNESS) | O WITHOUT CRACKING | 7.773 | 0.998 | 99.872 |
| | 32 | 1.72 | 0.079 | | O WITHOUT CRACKING | 7.872 | 0.998 | 99.875 |
| | 33 | 1.72 | 0.166 | 54mm φ (∼1.376mm) →113mm φ (∼0.80mm) →130mm φ (∼ FINAL SHEET THICKNESS) | O WITHOUT CRACKING | 7.856 | 0.996 | 99.688 |
| | 34 | 1.72 | 0.166 | | O WITHOUT CRACKING | 7.849 | 0.995 | 99.893 |
| | 35 | 1.72 | 0.166 | 54mm φ (∼1.376mm) →113mm φ (∼0.665mm) →58mm φ (∼ FINAL SHEET THICKNESS) | O WITHOUT CRACKING | 7.867 | 0.997 | 99.615 |
| | 36 | 1.72 | 0.166 | | O WITHOUT CRACKING | 7.872 | 0.998 | 99.888 |
| | 37 | 1.72 | 0.100 | 54mm φ (∼1.376mm) →216mm φ (∼0.482mm) →22mm φ (∼ FINAL SHEET THICKNESS) | O WITHOUT CRACKING | 7.868 | 0.997 | 99.894 |
| | 38 | 1.72 | 0.095 | | O WITHOUT CRACKING | 7.872 | 0.998 | 99.912 |
| | 39 | 1.72 | 0.151 | 54mm φ (∼1.376mm) →216mm φ (∼0.495mm) →160mm φ (∼ FINAL SHEET THICKNESS) | O WITHOUT CRACKING | 7,857 | 0.996 | 99.777 |
| | 40 | 1.72 | 0.151 | | O WITHOUT CRACKING | 7.856 | 0.996 | 99.832 |
| COMPARATI VE MATERIAL | 41 | 1.72 | 0.202 | 54mm φ (∼1.376mm) →250mm φ (∼0.40mm) →44mm φ (-FINAL SHEET THICKNESS) | ×× BLIND-LIKE CRACKING | 7.832 | 0.993 | 98.764 |
| | 42 | 1.72 | 0.166 | 54mm φ (∼1.376mm) →113mm φ (∼0.40mm) →54mm φ (∼ FINAL SHEET THICKNESS) | × CRACKING | 7.840 | 0.994 | 96.525 |
| | 43 | 1.72 | 0.166 | 54mm φ (∼1.376mm) →113mm φ (∼0.40mm) →44mm φ (∼ FINAL SHEET THICKNESS) | × CRACKING | 7.833 | 0.993 | 97.231 |
| | 44 | 1.72 | 0.098 | 54mm φ (∼1.376mm) →216mm φ (∼0.28mm) →22mm φ (∼ FINAL SHEET THICKNESS) | × CRACKING | 7.824 | 0.992 | 99.433 |
| | 45 | 1.72 | 0.151 | | ×× BLIND-LIKE CRACKING | 7.801 | 0.989 | 98.896 |

It was confirmed that all of the starting materials rolled under the cold rolling conditions shown as the examples showed good pressing performances, whereas the cold rolling conditions shown as the comparative materials failed to secure press formability. According to the results shown in Table 3, it was confirmed that causing the microscopic voids to disappear to make the density ratio 0.995 or higher is very important to secure the press formability.

As for the cold rolling condition to increase the density ratio, it is clarified that the following control is effective.
(A1) The smaller the work roll diameter of a cold rolling machine is, the finer the crushing of the M2B boride-based metal precipitates is, and a lowest value of density decreases. Note that this has a correlation with sheet thickness. In addition, as the work roll diameter is smaller, the crushing behavior of the M2B boride-based metal precipitates in the inside (the deep portion) in a sheet thickness is less likely to occur.
(A2) The crushing behavior of the M2B boride-based metal precipitate can be explained by a shearing stress between the sheet surface and the roll surface during the rolling, and a shearing stress occurring inside the sheet, and a region suffering a larger shearing stress shows a more remarkable crushing of the M2B boride-based metal precipitates.
(A3) When cold rolling is continuously performed with the same work roll diameter, the crushing of M2B boride-based metal precipitates proceeds, and thereafter voids occurring in the inside are squashed to disappear owing to matrix deformation. Note that, comparing between the case where the work roll diameter is a small diameter and the case where the work roll diameter is a large diameter, the disappearance of the voids more quickly proceeds in the case of being a large diameter. By appropriately selecting a work roll diameter used in the cold rolling step, it is possible to control the crushing of M2B boride-based metal precipitates and the reduction and disappearance of microscopic voids occurring in the inside at a desired finished sheet thickness.
(A4) When even a starting material for which cold rolling is continuously performed with the same work roll diameter, the crushing of M2B boride-based metal precipitates proceeds, and thereafter voids occurring in the inside are squashed to disappear owing to matrix deformation, is subjected to cold rolling again with work rolls having a smaller diameter, the crushing of M2B boride-based metal precipitates proceeds again, microscopic voids occur in the inside, and the density decreases. In addition, even when the rolling tension is increased, the microscopic voids occur, and the density decreases.
(A5) When cold rolling is performed using work rolls having a diameter larger than a work roll diameter used in the state where a sheet thickness is larger than roughly from 1.5 mm to 2 mm, it is possible to control the crushing of M2B boride-based metal precipitates and the reduction and disappearance of microscopic voids occurring in the inside at a desired finished sheet thickness. This is a simple empirical rule obtained by the inventors.

Table 3 also shows surface contact resistance values that are contact resistance values with carbon paper from Toray Industries, Inc. measured by the four-terminal method. There is the correlation between the surface contact resistance values and the volumetric-basis particle-size frequency distribution of the sphere-equivalent diameters of M2B boride-based metal precipitates being 6.72 µm or less. A volumetric-basis particle-size frequency distribution of 99.433% or lower is determined to be poor, and a volumetric-basis particle-size frequency distribution of 99.615% or higher is determined to be improved to a desired level and stably good. It is considered that a threshold value lies near 99.5%.

### Example 3

Steel materials 2, 3, 8, and 9 in Table 1 were prototyped using the stainless steel volume-production line described in Example 1. In this example, a finished sheet thickness of hot rolling using a volume-production tandem hot rolling machine was set at 3.2 mm, and after being descaled using a normal annealing/pickling line, the steel materials were subjected to surface grinding using a coil grinder to have a sheet thickness of 3.0 mm.

Cold rolling from a sheet thickness of 3.0 mm to a sheet thickness of 1.6 mm was performed using a vertical-20-roll stainless-steel-dedicated Sendzimir cold rolling machine having a work roll diameter of 54 mmφ. After intermediate annealing and pickling, a vertical-six-roll cold rolling machine dedicated to foil rolling having a work roll diameter of 130 mmφ was used to finish the steel materials to have a final sheet thickness of 0.116 mm while performing intermediate annealing. All the apparent densities at a final sheet thickness of 0.116 mm as desired were 0.995 or higher, assuming that the density of an annealed hot rolling steel material, which is considered to be a real density, is 1. The surface contact resistances were confirmed to be low. The results of various kinds of evaluation are collectively shown in Table 4.

**[Table 4]**

| | | APPLIED MATERIAL | APPARENT DENSITY OF HOT ROLLING MATERIALAFTER ANNEALING (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 46 | STEEL MATERIALS 2 | 7.855 | M2B+M23C6 | O WITHOUT CRACKING | 7.840 | 0.998 | 99.881 |
| | 47 | STEEL MATERIALS 3 | 7.865 | M2B+M23C6 | O WITHOUT CRACKING | 7.849 | 0.998 | 99.888 |
| | 48 | STEEL MATERIALS 8 | 7.826 | M2B | O WITHOUT CRACKING | 7.810 | 0.998 | 99.878 |
| | 49 | STEEL MATERIALS 9 | 7.812 | M2B | O WITHOUT CRACKING | 7.789 | 0.997 | 99.891 |

In the steel materials 2 and 3, the concentrations of C in steel are high in comparison with the steel materials 1 described in Example 1. For this reason, it was confirmed that part of C in steel precipitated on around M2B, in grains, and in grain boundaries, in the form of M23C6 chromium carbides. By causing the M23C6 chromium carbides to precipitate on large M2B boride-based metal precipitates dispersed in steel serving as nuclei, or around thereof, it is possible to increase the number of contact points excellent in conductivity and the area of the contact points, and to improve the surface contact resistance equivalent to that by gold plating.

In the steel materials 8 and 9, the precipitation amount of M2B boride-based metal precipitates is increased by increasing the amount of B added in steel. When the amount of B in steel is increased, hot deformation resistance and cold deformation resistance are increased, and a load on a rolling machine is increased, which makes the production difficult. However, the production is possible at the content of B: up to 0.8%, assuming that a normal cold rolling machine for stainless steel volume production is applied.

A cold-rolled coil having a sheet thickness of 0.116 mm was annealed in a normal bright annealing line for stainless, and a press separator having a reaction channel area of 100 cm² was press formed using a progressive die.

Figure 4 is a picture illustrating appearance after the press forming. As illustrated in Figure 4, pressing cracks did not occur, and a good press formability was confirmed.

### Example 4

Steel materials 4, 5, 6, 7, 12, 14, 15 in Table 1 were subjected to ingot-making using a different-diameter twin-roll thin slab continuous casting machine on a 10-ton melting amount scale. A slab thickness was 28 mm, and a slab width was 480 mm. The ingots were each cut off into pieces having a length of 500 cm, subjected to slab surface grinding and conditioning as being heated ingots, heated and retained as they were in a soaking pit at 1080°C, and thereafter subjected to hot rolling into coils having a thickness of 2.8 mm, and a width of 520 mm.

The coils were annealed in an electric furnace at 1030°C, thereafter subjected to forced air cooling outside of the furnace, thereafter subjected to surface grinding in a coil grinder line, and subjected to coil end face slit working into coils having a sheet thickness of 2.3 mm and a width of 480 mm. The coils were subjected to cold rolling from a sheet thickness of 2.3 mm to 1.7 mm using a vertical-20-roll stainless-steel-dedicated Sendzimir cold rolling machine having a work roll diameter of 24 mmφ, thereafter subjected to cold rolling to have a thickness of 0.126 mm while subjected to intermediate annealing using a vertical-20-roll stainless-steel-dedicated Sendzimir cold rolling machine having a work roll diameter of 80 mmφ, and subjected to finishing annealing at 980°C in a bright annealing furnace. The results of various kinds of evaluation are collectively shown in Table 5.

**[Table 5]**

| | | APPLIED MATERIAL | APPARENT DENSITY OF HOT ROLLING MATERIAL AFTER ANNEALING (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 50 | STEEL MATERIALS 4 | 7.822 | M2B | O WITHOUT CRACKING | 7.806 | 0.998 | 99.881 |
| | 51 | STEEL MATERIALS 5 | 7.845 | M2B | O WITHOUT CRACKING | 7.837 | 0.999 | 99.888 |
| | 52 | STEEL MATERIALS 6 | 7.846 | M2B | O WITHOUT CRACKING | 7.830 | 0.998 | 99.878 |
| | 53 | STEEL MATERIALS 7 | 8.040 | M2B | O WITHOUT CRACKING | 8.016 | 0.997 | 99.891 |
| | 54 | STEEL MATERIALS 12 | 7.923 | M2B | O WITHOUT CRACKING | 7.899 | 0.997 | 99.869 |
| | 55 | STEEL MATERIALS 14 | 7.695 | M2B | D WITHOUT CRACKING | 7.680 | 0.998 | 99.875 |
| | 56 | STEEL MATERIALS 15 | 8.053 | M2B | O WITHOUT CRACKING | 8.021 | 0.996 | 99.868 |

From Table 5, the effect of the present invention is obvious.

### Example 5

Austenitic stainless steel materials having the components of steel materials 10 and 13 in Table 1 were melted by 20 kg for each in an induction melting furnace in a large vacuum chamber and made into foil having a thickness of 246 to 77 µm and a width of 180 to 220 mm by a ultra-rapid cooling method using a water-cooled copper-made twin-roll (diameter: 800 mm) for ultra-rapid cooled foil production installed in the same large vacuum chamber. This is normal equipment as a copper-made twin-roll for ultra-rapid cooled foil production.

Because the amounts of B in steel are as high as 1.02% and 3.1%, the production of steel strips is substantially impossible by a normal ingot-making process, forging, and rolling method, owing to their excessively high deformation resistances. However, by the ultra-rapid cooling method, foil for practical use was obtained.

It was confirmed that very fine M2B were dispersed in steel substantially uniformly, and it was confirmed that the volume ratio as M2B was 27%, and the volumetric-basis particle-size frequency distribution of sphere-equivalent diameters of 6.72 µm or less was 100%. The results of various kinds of evaluation are collectively shown in Table 6.

**[Table 6]**

| | | APPLIED MATERIAL | APPARENT DENSITY OF STARTING MATERIAL (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 57 | STEEL MATERIALS 10 | 7.812 | M2B | - | 7.538 | 0.965 | 100 |
| | 58 | STEEL MATERIALS 13 | 7.695 | M2B | - | 7.372 | 0.958 | 100 |

From Table 6, the effect of the present invention is obvious.

The production of ultra-rapid cooled foil by a single-roll technique also widely takes place. The production by the single-roll technique raises no problem. In addition, for the purpose of improving the smoothness of a foil surface to decrease inner defects, it may suffice to perform annealing as necessary after performing cold rolling, and apply the foil to a polymer electrolyte fuel cell separator. This improves sheet thickness accuracy, flatness, and smoothness of surface state, and improves the formability. In an ultra-rapid cooled foil, M2B were uniformly dispersed and very fine. They were considered to be less than 1 mm in terms of sphere-equivalent diameter.

### Example 6

A three-layered clad was fabricated by using a steel material 11 in Table 1 as a core material, and using the steel material 1 as both surfaces. The clad ratio was 1 : 2 : 1. Cladding was performed as crimping and joining by hot rolling. Slab treatment to prevent end face cracking and coil perforation in a hot rolling step and a subsequent cold rolling step was performed in a clad-slab assembling step. An assembled slab for clad rolling before the hot rolling had a thickness of 180 mm and a slab width of 1250 mm.

The finished sheet thickness of the hot rolling using a volume-production tandem hot rolling machine was set at 3.2 mm. After being descaled using a normal annealing/pickling line, the three-layered clad was subjected to surface grinding using a coil grinder to have a sheet thickness of 3.0 mm.

Cold rolling from a sheet thickness of 3.0 mm to a sheet thickness of 1.6 mm was performed using a vertical-20-roll stainless-steel-dedicated Sendzimir cold rolling machine having a work roll diameter of 54 mmφ. After intermediate annealing and pickling, a vertical-six-roll cold rolling machine dedicated to foil rolling having a work roll diameter of 130 mmφ was used to finish the three-layered clad to have a final sheet thickness of 0.116 mm while performing intermediate annealing.

The clad ratio at a thickness of 0.116 mm being the final sheet thickness was 24 : 53 : 23, and it was confirmed that the clad ratio 1 : 2 : 1 at the time of clad-slab assembling was substantially kept even at the final sheet thickness.

The volume ratio of M2B boride-based metal precipitates contained in a sheet outer layer portion which has a depth of a ratio of 0.2 from a sheet surface in the thickness direction is the volume ratio of a portion corresponding to the steel material 1, assuming that a sheet thickness is 1, and it can be determined that the volume ratio of the steel materials 1 was kept as it was.

The density of the clad steel sheet is a density of starting materials in accordance with the clad ratio with reference to the densities of the starting materials. The apparent density at a final sheet thickness of 0.116 mm as desired was 7.881 g/cm³, and assuming that the density of an annealed hot rolling steel material, which is considered to be a real density, is 1, 7.881/7.889 = 0.999, which was 0.995 or higher.

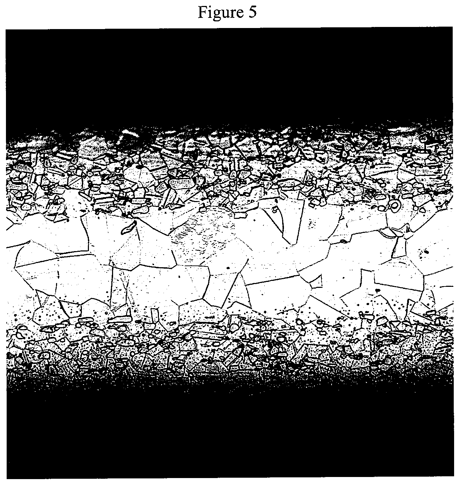

The cross-sectional microscopic picture of the clad steel sheet is illustrated in Figure 5, and the results of evaluation are collectively shown in Table 7.

**[Table 7]**

| | | CLAD CONSTITUEN T MATERIAL | CLAD APPARENT DENSITY OF STARTING MATERIAL (g/cm³) | CONDUCTIVE METAL PRECIPITATES PRESENT IN SHEET OUTER LAYER PORTION DOWN TO DEPTH OF RATIO OF 0.2 FROM SHEET SURFACE IN SHEET THICKNESS DIRECTION, ASSUMING SHEET THICKNESS TO BE 1 | SUMMARY OF RESULTS OF EVALUATING FINAL-SHEET-THICKNESS STARTING MATERIALS | | | |
|---|---|---|---|---|---|---|---|---|
| | | | | | CLAD PRESSING PERFORMANCE | CLAD APPARENT DENSITY | CLAD DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS INCLUDED IN SHEET OUTER LAYER PORTION DOWN TO DEPTH OF RATIO OF 0.2 FROM SHEET SURFACE IN SHEET THICKNESS DIRECTION, ASSUMING SHEET THICKNESS TO BE 1 (%) |
| EXAMPLE | 59 | STEEL MATERIALS 1 AND STEEL MATERIALS 11 | 7.889 | M2B | WITHOUT CRACKING | 7.881 | 0.999 | 99.892 |

From Table 7, the effect of the present invention is obvious.

The same behavior as that of the austenitic stainless steel sheet according to the present invention described above can be considered to proceed also in an austenitic stainless steel sheet applied clad according to the present invention. That is, the behavior is as follows.
(B1) The smaller the work roll diameter of a cold rolling machine is, the finer the crushing the M2B boride-based metal precipitates is, and a lowest value of density decreases. Note that this has a correlation with sheet thickness. In addition, as the work roll diameter is smaller, the crushing behavior of the M2B boride-based metal precipitates in the inside (the deep portion) in a sheet thickness is less likely to occur.
(B2) The crushing behavior of the M2B boride-based metal precipitate can be explained by a shearing stress between the sheet surface and the roll surface during the rolling, and a shearing stress occurring inside the sheet, and a region suffering a larger shearing stress shows a more remarkable crushing of the M2B boride-based metal precipitates.
(B3) When cold rolling is continuously performed with the same work roll diameter, the crushing of M2B boride-based metal precipitates proceeds, and thereafter voids occurring in the inside are squashed to disappear owing to matrix deformation. Note that, comparing between the case where the work roll diameter is a small diameter and the case where the work roll diameter is a large diameter, the disappearance of the voids more quickly proceeds in the case of being a large diameter. By appropriately selecting a work roll diameter used in the cold rolling step, it is possible to control the crushing of M2B boride-based metal precipitates and the reduction and disappearance of microscopic voids occurring in the inside at a desired finished sheet thickness.
(B4) When even a starting material for which cold rolling is continuously performed with the same work roll diameter, the crushing of M2B boride-based metal precipitates proceeds, and thereafter voids occurring in the inside are squashed to disappear owing to matrix deformation, is subjected to cold rolling again with work rolls having a smaller diameter, the crushing of M2B boride-based metal precipitates proceeds again, microscopic voids occur in the inside, and the density decreases. In addition, even when the rolling tension is increased, the microscopic voids occur, and the density decreases.
(B5) When cold rolling is performed using work rolls having a diameter larger than a work roll diameter used in the state where a sheet thickness is larger than roughly from 1.5 mm to 2 mm, it is possible to control the crushing of M2B boride-based metal precipitates and the reduction and disappearance of microscopic voids occurring in the inside at a desired finished sheet thickness. This is a simple empirical rule obtained by the inventors.

### Example 7

A steel material 16 in Table 2 was melted in an 80-ton-scale refinery furnace for stainless steel, and made into a slab having a thickness of 250 mm and a width of 1050 mm, using slab continuous casting equipment. When the slab of the steel materials 16 is allowed to be cooled as it is, slab inner cracking and slab rupture occurs. Thus, the slab was charged in a slab heating furnace for hot rolling, which is the next process, as being heated slab, while temperature is managed so that the surface temperature of the slab does not fall down to 300°C or lower.

The slab was heated and retained at 1180°C for 6 hours and thereafter made into a hot rolling coil having a sheet thickness of 2.0 mm using a volume-production tandem hot rolling machine. The hot rolling coil was subjected to forced cooling on a tandem hot rolling mill delivery side and also subjected to forced cooling at the time of winding up the coil.

High-temperature oxide scales on the surface of the hot rolling coil were removed by a continuous annealing/pickling line used in a normal volume production to provide a coil for cold rolling. Cold rolling from a thickness of 2.0 mm to a thickness of 1.2 mm was performed using a vertical-20-roll stainless-steel-dedicated Sendzimir cold rolling machine having a work roll diameter of 54 mmφ. After intermediate annealing and pickling, a vertical-six-roll cold rolling machine dedicated to foil rolling having a work roll diameter of 130 mmφ was used to finish the cold rolling coil to have a final sheet thickness of 0.116 mm while performing intermediate annealing. The apparent density at a final sheet thickness of 0.166 mm as desired was 0.995 or higher, assuming that the density of an annealed hot rolling steel material, which is considered to be a real density, is 1. The results of evaluation are collectively shown in Table 8.

**[Table 8]**

| | | APPLIED MATERIAL | APPARENT DENSITY OF HOT ROLLING MATERIAL AFTER ANNEALING (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 60 | STEEL MATERIALS 16 | 7.856 | M2B | O WITHOUT CRACKING | 7.825 | 0.996 | 99.672 |

From Table 8, the effect of the present invention is obvious.

### Example 8

Steel materials 17, 18, 23, and 24 in Table 2 were prototyped using the stainless steel volume-production line used in Example 7. In Example 8, the finished sheet thickness of the hot rolling using a volume-production tandem hot rolling machine was set at 2 mm. After being descaled using a normal annealing/pickling line, the three-layered clad was subjected to surface grinding using a coil grinder to have a sheet thickness of 1.8 mm.

Cold rolling from a thickness of 1.8 mm to a thickness of 1.3 mm was performed using a vertical-20-roll stainless-steel-dedicated Sendzimir cold rolling machine having a work roll diameter of 54 mmφ. After intermediate annealing and pickling, a vertical-six-roll cold rolling machine dedicated to foil rolling having a work roll diameter of 130 mmφ was used to finish the cold rolling coil to have a final sheet thickness of 0.116 mm while performing intermediate annealing. All the apparent densities at a final sheet thickness of 0.116 mm as desired were 0.995 or higher, assuming that the density of an annealed hot rolling steel material, which is considered to be a real density, is 1. The results of evaluation are collectively shown in Table 9.

**[Table 9]**

| | | APPLIED MATERIAL | APPARENT DENSITY OF HOT ROLLING MATERIAL AFTER ANNEALING (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 61 | STEEL MATERIALS 17 | 7.833 | M2B+M23C6 | O WITHOUT CRACKING | 7.817 | 0.998 | 99.754 |
| | 62 | STEEL MATERIALS 18 | 7.834 | M2B+M23C6 | O WITHOUT CRACKING | 7.818 | 0.998 | 99.693 |
| | 63 | STEEL MATERIALS 23 | 7.834 | M2B | O WITHOUT CRACKING | 7.818 | 0.998 | 99.783 |
| | 64 | STEEL MATERIALS 24 | 7.817 | M2B | O WITHOUT CRACKING | 7.801 | 0.998 | 99.594 |

As shown in Table 9, in the steel materials 17 and 18, the concentration of C in steel is high in comparison with the steel materials 16 described in Example 7. It was confirmed that part of C in steel precipitated on around M2B, in grains, and in grain boundaries, in the form of M23C6 chromium carbides. The M23C6 chromium carbides are metal precipitates excellent in conductivity, as with M2B. By causing the M23C6 chromium carbides to precipitate on large M2B boride-based metal precipitates that are dispersed in large quantities and serve as nuclei, or around thereof, it is possible to increase the number of contact points excellent in conductivity and the area of the contact points, and to improve the surface contact resistance remarkably. The precipitating position control of the M23C6 chromium carbides can be performed by intermediate annealing temperature control and final finishing temperature control that are performed in the middle of the cold rolling.

Meanwhile, the steel materials 23 and 24 are steel materials in which the precipitation amount of M2B boride-based metal precipitate is increased by increasing the amount of B added in steel. When the amount of B in steel is increased, hot deformation resistance and cold deformation resistance are increased, and a load on a rolling machine is increased, which makes the production difficult. However, the production is possible without any problems at a content of B of up to 0.8%, assuming that a normal cold rolling machine for stainless steel volume production is applied.

The same behavior as that of the austenitic stainless steel sheet according to the present invention described above can be considered to proceed also in a ferritic stainless steel sheet according to the present invention. That is, the behavior is as follows.
(C1) The smaller the work roll diameter of a cold rolling machine is, the finer the crushing the M2B boride-based metal precipitates is, and a lowest value of density decreases. Note that this has a correlation with sheet thickness. In addition, as the work roll diameter is smaller, the crushing behavior of the M2B boride-based metal precipitates in the inside (the deep portion) in a sheet thickness is less likely to occur.
(C2) The crushing behavior of the M2B boride-based metal precipitate can be explained by a shearing stress between the sheet surface and the roll surface during the rolling, and a shearing stress occurring inside the sheet, and a region suffering a larger shearing stress shows a more remarkable crushing of the M2B boride-based metal precipitates.
(C3) When cold rolling is continuously performed with the same work roll diameter, the crushing of M2B boride-based metal precipitates proceeds, and thereafter voids occurring in the inside are squashed to disappear owing to matrix deformation. Note that, comparing between the case where the work roll diameter is a small diameter and the case where the work roll diameter is a large diameter, the disappearance of the voids more quickly proceeds in the case of being a large diameter. By appropriately selecting a work roll diameter used in the cold rolling step, it is possible to control the crushing of M2B boride-based metal precipitates and the reduction and disappearance of microscopic voids occurring in the inside at a desired finished sheet thickness.
(C4) When even a starting material for which cold rolling is continuously performed with the same work roll diameter, the crushing of M2B boride-based metal precipitates proceeds, and thereafter voids occurring in the inside are squashed to disappear owing to matrix deformation, is subjected to cold rolling again with work rolls having a smaller diameter, the crushing of M2B boride-based metal precipitates proceeds again, microscopic voids occur in the inside, and the density decreases. In addition, even when the rolling tension is increased, the microscopic voids occur, and the density decreases.
(C5) When cold rolling is performed using work rolls having a diameter larger than a work roll diameter used in the state where a sheet thickness is larger than roughly from 1.5 mm to 2 mm, it is possible to control the crushing of M2B boride-based metal precipitates and the reduction and disappearance of microscopic voids occurring in the inside at a desired finished sheet thickness. This is a simple empirical rule obtained by the inventors.

### Example 9

Steel materials 20, 21, 22, 23, 28, 29, and 30 in Table 2 were subjected to ingot-making using a different-diameter twin-roll thin slab continuous casting machine on a 10-ton melting amount scale. A slab thickness was 28 mm, and a slab width was 480 mm. The ingots were each cut off into pieces having a length of 500 cm, subjected to slab surface grinding and conditioning as being heated ingots, heated and retained as they were in a soaking pit at 1080°C, and thereafter subjected to hot rolling into coils having a thickness of 2.0 mm, and a width of 520 mm.

The heat rolled coils were annealed in an electric furnace at 980°C, thereafter subjected to forced air cooling outside of the furnace, subjected to surface grinding in a coil grinder line, and subjected to coil end face slit working into heat rolled coils having a sheet thickness of 1.8 mm and a width of 480 mm.

Next, the heat rolled coils were subjected to cold rolling from a sheet thickness of 1.8 mm to 0.8 mm using a vertical-20-roll stainless-steel-dedicated Sendzimir cold rolling machine having a work roll diameter of 24 mmφ, thereafter subjected to cold rolling to have a thickness of 0.126 mm while subjected to intermediate annealing using a vertical-20-roll stainless-steel-dedicated Sendzimir cold rolling machine with 80 mmφ work rolls, and subjected to finishing annealing at 980°C in a bright annealing furnace. The results of evaluation are collectively shown in Table 10.

**[Table 10]**

| | | APPLIED MATERIAL | APPARENT DENSITY OF HOT ROLLING MATERIALAFTER ANNEALING (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 65 | STEEL MATERIALS 20 | 7.876 | M2B | ○ WITHOUT CRACKING | 7.860 | 0.998 | 99.832 |
| | 66 | STEEL MATERIALS 21 | 7.874 | M2B | ○ WITHOUT CRACKING | 7.866 | 0.999 | 99.822 |
| | 67 | STEEL MATERIALS 22 | 7.853 | M2B | ○ WITHOUT CRACKING | 7.837 | 0.998 | 99.871 |
| | 68 | STEEL MATERIALS 23 | 7.834 | M2B | ○ WITHOUT CRACKING | 7.818 | 0.998 | 99.843 |
| | 69 | STEEL MATERIALS 27 | 7.858 | M2B | ○ WITHOUT CRACKING | 7.842 | 0.998 | 99.867 |
| | 70 | STEEL MATERIALS 29 | 7.871 | M2B | ○ WITHOUT CRACKING | 7.847 | 0.997 | 99.882 |
| | 71 | STEEL MATERIALS 30 | 7.931 | M2B | ○ WITHOUT CRACKING | 7.907 | 0.997 | 99.765 |

From Table 10, the effect of the present invention is obvious.

### Example 10

Ferritic stainless steel materials having the chemical components of steel materials 25 and 28 in Table 2 were melted by 20 kg for each in an induction melting furnace in a large vacuum chamber and made into foil having a thickness of 246 to 77 µm and a width of 180 to 220 mm by a ultra-rapid cooling method using a water-cooled copper-made twin-roll (diameter: 800 mm) for ultra-rapid cooled foil production installed in the same large vacuum chamber. This is normal equipment as a copper-made twin-roll for ultra-rapid cooled foil production.

Because the amounts of B in steel are as high as 1.01% and 3.05%, the production of steel strips is substantially impossible by a normal ingot-making process, forging, and rolling method, owing to their excessively high deformation resistances. However, by the ultra-rapid cooling method, foil for practical use was obtained.

It was confirmed that very fine M2B were dispersed in steel substantially uniformly, and it was confirmed that the volume ratio as M2B was 14% or higher, and the volumetric-basis particle-size frequency distribution of sphere-equivalent diameters of 6.72 µm or less was 100%. The results of evaluation are collectively shown in Table 11.

**[Table 11]**

| | | APPLIED MATERIAL | APPARENT DENSITY OF STARTING MATERIAL (g/cm³) | CONDUCTIVE METAL PRECIPITATE | SUMMARY OF RESULTS OF EVALUATING FINAL-SHEET-THICKNESS STARTING MATERIALS | | | |
|---|---|---|---|---|---|---|---|---|
| | | | | | PRESSING PERFORMANCE | APPARENT DENSITY | DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS (%) |
| EXAMPLE | 72 | STEEL MATERIALS 25 | 7.803 | M2B | - | 7.475 | 0.958 | 100 |
| | 73 | STEEL MATERIALS 28 | 7.645 | M2B | - | 7.347 | 0.961 | 100 |

From Table 11, the effect of the present invention is obvious.

An ultra-rapid cooled foil may be produced by a single-roll technique. In addition, for the purpose of improving the smoothness of a foil surface to decrease inner defects, it may suffice to perform annealing as necessary after performing cold rolling, and apply the foil to a polymer electrolyte fuel cell separator.

### Example 11

A three-layered clad was fabricated by using a steel material 11 in Table 1 as a core material, and using the steel material 16 as both surfaces, and a three-layered clad was fabricated by using a steel material 26 in Table 2 as a core material, and using the steel material 16 as both surfaces. Cladding was performed by hot rolling.

Slab treatment to prevent end face cracking and coil perforation in a hot rolling step and a subsequent cold rolling step was performed in a clad assembling step. An assembled slab for clad rolling before the hot rolling had a thickness of 180 mm and a slab width of 1250 mm.

The finished sheet thickness of the hot rolling using a volume-production tandem hot rolling machine was set at 2.2 mm. After being descaled using a normal annealing/pickling line, the three-layered clad was subjected to surface grinding using a coil grinder to have a sheet thickness of 2.05 mm.

Cold rolling from a sheet thickness of 2.05 mm to a sheet thickness of 1.6 mm was performed using a vertical-20-roll stainless-steel-dedicated Sendzimir cold rolling machine having a work roll diameter of 54 mmφ. After intermediate annealing and pickling, a vertical-six-roll cold rolling machine dedicated to foil rolling having a work roll diameter of 130 mmφ was used to finish the three-layered clad to have a final sheet thickness of 0.116 mm while performing intermediate annealing. The densities at a final sheet thickness of 0.116 mm as desired were 0.995 or higher, assuming that the density of an annealed hot rolling steel material is 1. The results of evaluation are collectively shown in Table 12.

**[Table 12]**

| | | CLAD CONSTITUEN MATERIAL | CLAD APPARENT DENSITY OF STARTING MATERIAL (g/cm³) | CONDUCTIVE METAL PRECIPITATES PRESENT IN SHEET OUTER LAYER PORTION DOWN TO DEPTH OF RATIO OF 0.2 FROM SHEET SURFACE IN SHEET THICKNESS DIRECTION, ASSUMING SHEET THICKNESS TO BE 1 | SUMMARY OF RESULTS OF EVALUATING FINAL-SHEET-THICKNESS STARTING MATERIALS | | | |
|---|---|---|---|---|---|---|---|---|
| | | | | | CLAD PRESSING PERFORMANCE | CLAD APPARENT DENSITY | CLAD DENSITY RATIO | VOLUMETRIC-BASIS PARTICLE-SIZE FREQUENCY DISTRIBUTION OF M2B BORIDE-BASED METAL PRECIPITATES HAVING SPHERE-EQUIVALENT DIAMETERS OF 6.72 µm OR LESS INCLUDED IN SHEET OUTER LAYER PORTION DOWN TO DEPTH OF RATIO OF 0.2 FROM SHEET SURFACE IN SHEET THICKNESS DIRECTION, ASSUMING SHEET THICKNESS TO BE 1 (%) |
| EXAMPLE | 74 | STEEL MATERIALS 16 AND STEEL MATERIALS 11 | 7.879 | M2B | WITHOUT CRACKING | 7.863 | 0.998 | 99.89 |
| | 75 | STEEL MATERIALS 16 AND STEEL MATERIALS 26 | 7.869 | M2B | WITHOUT CRACKING | 7.853 | 0.998 | 98.32 |

From Table 12, the effect of the present invention is obvious.

The same behavior as that of the austenitic stainless steel sheet and the clad steel sheet thereof, as well as the ferritic stainless steel sheet according to the present invention described above can be considered to proceed also in a ferritic stainless steel sheet applied clad according to the present invention. That is, the behavior is as follows.
(D1) The smaller the work roll diameter of a cold rolling machine is, the finer the crushing of the M2B boride-based metal precipitates is, and a lowest value of density decreases. Note that this has a correlation with sheet thickness. In addition, as the work roll diameter is smaller, the crushing behavior of the M2B boride-based metal precipitates in the inside (the deep portion) in a sheet thickness is less likely to occur.
(D2) The crushing behavior of the M2B boride-based metal precipitate can be explained by a shearing stress between the sheet surface and the roll surface during the rolling, and a shearing stress occurring inside the sheet, and a region suffering a larger shearing stress shows a more remarkable crushing of the M2B boride-based metal precipitates.
(D3) When cold rolling is continuously performed with the same work roll diameter, the crushing of M2B boride-based metal precipitates proceeds, and thereafter voids occurring in the inside are squashed to disappear owing to matrix deformation. Note that, comparing between the case where the work roll diameter is a small diameter and the case where the work roll diameter is a large diameter, the disappearance of the voids more quickly proceeds in the case of being a large diameter. By appropriately selecting a work roll diameter used in the cold rolling step, it is possible to control the crushing of M2B boride-based metal precipitates and the reduction and disappearance of microscopic voids occurring in the inside at a desired finished sheet thickness.
(D4) When even a starting material for which cold rolling is continuously performed with the same work roll diameter, the crushing of M2B boride-based metal precipitates proceeds, and thereafter voids occurring in the inside are squashed to disappear owing to matrix deformation, is subjected to cold rolling again with work rolls having a smaller diameter, the crushing of M2B boride-based metal precipitates proceeds again, microscopic voids occur in the inside, and the apparent density decreases. In addition, even when the rolling tension is increased, the microscopic voids occur, and the apparent density decreases.
(D5) When cold rolling is performed using work rolls having a diameter larger than a work roll diameter used in the state where a sheet thickness is larger than roughly from 1.5 mm to 2 mm, it is possible to control the crushing of M2B boride-based metal precipitates and the reduction and disappearance of microscopic voids occurring in the inside at a desired finished sheet thickness. This is a simple empirical rule obtained by the inventors.

### REFERENCE SIGNS LIST

- 1: fuel cell
- 2: polymer electrolyte membrane
- 3: fuel electrode film (anode)
- 4: oxidant electrode film (cathode)
- 5a, 5b: separator
- 6a, 6b: channel

## Claims

1. A stainless steel sheet used for a separator of a polymer electrolyte fuel cell, wherein
the steel sheet has a volume ratio of M2B boride-based metal precipitates of 8% or higher and a volumetric-basis particle-size frequency distribution of M2B boride-based metal precipitates having sphere-equivalent diameters of 6.72 µm or less of 99.5% or higher, in surface layer which has a depth of 0.2t from at least one of surfaces of the steel sheet (t is an overall thickness of the steel sheet), and
the steel sheet has an apparent density of 0.995 or higher, assuming a real density to be 1.

2. The stainless steel sheet according to claim 1, wherein
the stainless steel sheet is an austenitic stainless steel sheet,
the surface layer has a chemical composition containing, in mass %,
C: 0.005 to 0.2%,
Si: 0.01 to 1.5%,
Mn: 0.01 to 2.5%,
P: 0.035% or less,
S: 0.01% or less,
Cr: 16.0 to 30.0%,
Mo: 7.0% or less,
Ni: 7.0 to 50.0%,
Cu: 0.01 to 3.0%,
N: 0.001% to 0.4%,
V: 0.3% or less,
B: 0.50 to 3.0%,
Al: 0.001 to 0.2%,
W: 0 to 4.0%,
Sn: 0 to 3.0%,
rare earth metals: 0 to 0.1%, and
the balance: Fe and impurities, and
a calculated value of [Cr%] + 3 × [Mo%] - 2.5 × [B%] - 17 × [C%] is 24.0 to 45.0%.

3. The austenitic stainless steel sheet according to claim 2, wherein
the chemical composition contains
W: 0.01 to 4.0% and/or
Sn: 0.01 to 3.0%.

4. The austenitic stainless steel sheet according to claim 2 or 3, wherein
the chemical composition contains
rare earth metals: 0.001 to 0.1%.

5. The stainless steel sheet according to claim 1, wherein
the stainless steel sheet is a ferritic stainless steel sheet,
the surface layer has a chemical composition containing, in mass %,
C: 0.001 to 0.15%,
Si: 0.01 to 1.5%,
Mn: 0.01 to 1.0%,
P: 0.035% or less,
S: 0.01% or less,
Cr: 22.5 to 35.0%,
Mo: 6.00% or less,
Ni: 0.01 to 6.0%,
Cu: 0.01 to 1.0%,
N: 0.06% or less,
V: 0.01 to 0.3%,
B: 0.50 to 3.0%,
Al: 0.001 to 6.0%,
W: 0 to 4.0%,
Sn: 0 to 3.0%,
rare earth metals: 0 to 0.1%, and
the balance: Fe and impurities, and
a calculated value of [Cr%] + 3 × [Mo%] - 2.5 × [B%] - 17 × [C%] is 24.0 to 45.0%.

6. The ferritic stainless steel sheet according to claim 5, wherein
the chemical composition contains
W: 0.01 to 4.0% and/or
Sn: 0.01 to 3.0%.

7. The ferritic stainless steel sheet according to claim 5 or 6, wherein
the chemical composition contains
rare earth metals: 0.001 to 0.1%.
